# EUROPÄISCHE PATENTSCHRIFT

(11) **EP 4 025 629 B1**
(45) Veröffentlichungstag und Bekanntmachung des Hinweises auf die Patenterteilung: **08.01.2025**
(21) Anmeldenummer: 20742728.7
(22) Anmeldetag: 17.07.2020
(51) Int. Cl.: C08G 79/02, C08L 85/02

(54) **OLIGOMER ODER POLYMER, ZUSAMMENSETZUNG, VERWENDUNG DES OLIGOMERS ODER POLYMERS SOWIE INTERMEDIAT**
OLIGOMER OR POLYMER, COMPOSITION, USE OF THE OLIGOMER OR POLYMER AND INTERMEDIATE
OLIGOMÈRE OU POLYMÈRE, COMPOSITION, UTILISATION DE L'OLIGOMÈRE OU DU POLYMÈRE ET INTERMÉDIAIRE

(30) Priorität: 06.09.2019 DE 102019213606
(43) Veröffentlichungstag der Anmeldung: 13.07.2022
(73) Patentinhaber: Fraunhofer-Gesellschaft zur Förderung der angewandten Forschung e.V., 80686 München (DE)
(72) Erfinder: OLSCHEWSKI, Markus, 64289 Darmstadt (DE); METZSCH-ZILLIGEN, Elke, 64289 Darmstadt (DE); PFAENDNER, Rudolf, 64289 Darmstadt (DE)
(74) Vertreter: Pfenning, Meinig & Partner mbB
(86) Internationale Anmeldenummer: PCT/EP2020/070333
(87) Internationale Veröffentlichungsnummer: WO 2021/043489

(56) Entgegenhaltungen:
- EP-A1- 0 768 314
- EP-A1- 2 061 829
- JP-A- 2001 002 690

## Beschreibung

Die vorliegende Erfindung betrifft ein Oligomer oder Polymer bzw. eine dieses Oligomer oder Polymer enthaltende Zusammensetzung, die sich insbesondere als Stabilisator für organische Materialien eignen.

Organische Materialien wie Kunststoffe unterliegen Alterungsvorgängen, die letztendlich zu einem Verlust der erwünschten Eigenschaften wie z.B. der mechanischen Kennwerte führen. Dieser Autoxidation genannte Vorgang führt ausgehend von radikalischen Kettenspaltungen durch mechanochemische Prozesse oder durch UV-Strahlung in Gegenwart von Sauerstoff zu Veränderungen derPolymerkette,wiez.B. im Molekulargewicht oder der Bildung neuer chemischer Gruppen. Um diese Alterung zu verhindern oderzumindest zu verzögernwerden deshalb Stabilisatoren eingesetzt. Wichtige Vertreter von Stabilisatoren sind Antioxidantien, die mitden bei der Autoxidation gebildeten Radikalen interferieren und damit den Abbauprozess unterbrechen. Man unterscheidet im Allgemeinen zwischen primären Antioxidantien, die direkt mit sauerstoffhaltigen freien Radikalen oder C-Radikalen reagieren können und sekundären Antioxidantien, die mit intermediär gebildeten Hydroperoxiden reagieren(s.C. Kröhnkeetal. Antioxidants in Ullmann's encyclopedia of industrial chemistry, Wiley-VCH Verlag, Weinheim 2015). Typische Vertreter von primären Antioxidantien sind beispielsweise phenolische Antioxidantien, Amine aber auch Lactone. Klassen von sekundären Antioxidantien sind Phosphorverbindungen wie z.B. Phosphite und Phosphonite, aber auch Organo-Schwefelverbindungen wie z.B. Thioether oder Disulfide. Üblicherweise werden in der Praxis häufig primäre und sekundäre Antioxidantien kombiniert, was zueinersynergistischen Wirkungführt.

In zunehmendem Maße werden Kunststoffe aus fossilen Rohstoffen wie Erdöl oder Erdgas durch Kunststoffe auf der Basisvon nachwachsenden Rohstoffen, die über biotechnologische Prozesse zugänglich sind, ergänztbzw.ersetzt. Die dafür (und für Kunststoffe aus fossilen Rohstoffen) eingesetzten primären und sekundären Antioxidantien sind jedoch nachwievor noch nicht umfassend auf der Basisvon nachwachsenden Rohstoffen.

Eine weitere Herausforderung für Antioxidantien insbesondere für Lebensmittelanwendungen und für den Einsatzvon Kunststoffen bei erhöhten Temperaturen istesdie Migration aus dem Kunststoff und dieFlüchtigkeitdereingesetzten Produktemöglichstgeringzuhaltenohnedie Wirksamkeit negativzu beeinflussen.

Grundsätzlich sind primäre Antioxidantien aus nachwachsenden Rohstoffen bekannt, die auch vereinzelt in Kunststoffen eingesetzt werden. Ein typisches Beispiel sindTocopherole (Vitamin E). Tocopherole weisen wie übliche Antioxidantien eine sterisch gehinderte Phenolstruktur auf und könnenalleinoderin Kombination mit sekundären Antioxidantien eingesetzt werden (z.B.S. AI Malaika, Macromol. Symp. 2001, 176, 107). Tocopherole können z.B. aus Naturstoffen wie z.B. Weizenkeimöl, Sonnenblumenöl oder Olivenöl isoliert werden. Andere bekannte phenolische Antioxidantien aus Naturstoffen, deren antioxidative Wirkung in Polymeren nachgewiesen wurden sind z.B. Quercetin, Hyperin, Rutin, Dihydromyrecetin, Sylimarin, Curcumin, Rosmarinsäure o-derCardanol.

Umdie Migration und die Flüchtigkeit von Antioxidantien zu reduzieren können vorzugsweise Substanzen mit hohem Molekulargewicht, insbes. Oligomere oder Polymere verwendet werden.

Die Herstellung und die Wirksamkeit dieser Antioxidantien sind beispielsweise in den folgenden Patenten beschrieben:
EP 2 061 829 (Preparation of liquid polymeric phosphites and phosphonites for use as stabilizers)
EP 0 685 519 (Oligomeric HALS-phosphites and HALS-phosphonites as stabilizers)

Die bekannten oligomeren und polymeren Antioxidantien sindjedoch nichtauf derBasisvon nachwachsenden Rohstoffen und/oder enthalten keinen 6-Hydroxychroman-Kern.

Aufgabe dervorliegenden Erfindung war es daher wirksameoligomere und polymere Antioxidantien anteilig oder weitge hend auf der Basisvon nachwachsenden Rohstoffenzur Verfügung zu stellen.

Diese Aufgabe wird hinsichtlich eines Oligomers bzw. Polymers, enthalten dann phosphorhaltiges Strukturelement mit den Merkmalen des Patentanspruchs 1, betreffen seine Zusammensetzung, enthalten die zuvor genannten Oligomere oder Polymere sowie eine zu stabilisierende organische Komponente mit den Merkmalen des Patentanspruchs 8, bezüglich Verwendungsmöglichkeiten der erfindungsgemäßen Oligomere oder Polymere mit den Merkmalen des Patentanspruchs 13 sowie betreffend eine Formmasse oder ein Formteil mit den Merkmalen des Patentanspruchs 15 gelöst. Die jeweiligen abhängigen Patentansprüche stellen dabei vorteilhafte Weiterbildungen dar.

Die vorliegende Erfindung betrifft somit ein Oligomer oder Polymer, umfassend als Strukturelement eine Struktur gemäß der allgemeinen Formel I 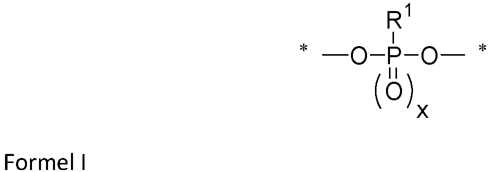
wobei R¹ gemäß der nachfolgenden Formel II definiert ist 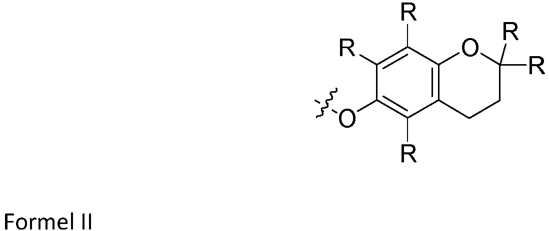
wobei
   - R: bei jedem Auftreten gleich oder verschieden ist und ausgewählt ist aus der Gruppe bestehend aus Wasserstoff oder linearen oder verzweigten Alkylresten mit 1 bis 36 Kohlenstoffatomen, und
   - x: 0 oder 1 ist.

Der Begriff Oligomer bzw. Polymer wird im Sinne der vorliegenden Erfindung im Allgemeinen in Übereinklang mit der von der IUPAC vorgenommenen Definition verwendet, wie in Pure Appl. Chem. 2016; 88 (10-11): 1073-1100 definiert.

Insbesondere wird unter einem Oligomer ein Molekül verstanden, das 3-10 sich wiederholende Einheiten aufweist, unter einem Polymer wird ein Molekül verstanden, das mehr als 10 sich wiederholende Einheiten aufweist. Daraus resultieren in der Regel mittlere Molekulargewichte (Zahlenmittel) von etwa 1000 bis 4000 für ein Oligomer und von mehr als 4000 für ein Polymer

Überraschenderweise konnte gefunden werden, dass die Oligomere oder Polymere gemäß der vorliegenden Erfindung eine hohe Wirksamkeit aufweisen.

Gemäß einer bevorzugten Ausführungsform ist R¹ gemäß nachfolgender Formel IIa definiert.

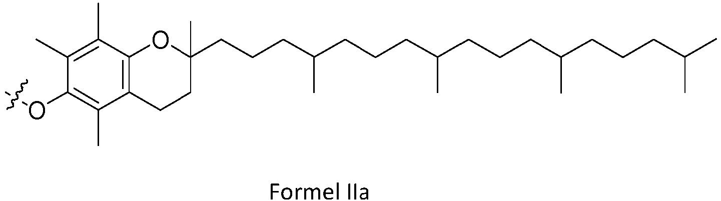

Eine weitere bevorzugte Ausführungsform sieht vor, dass das Oligomer bzw. Polymer die nachfolgende Wiederholungseinheit gemäß Formel III enthält, 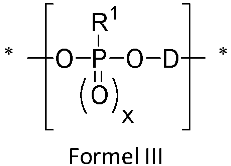 wobei D bei jedem Auftreten gleich oder verschieden ist und eine von einem Diol abgeleitete Funktionalität ist.

Bevorzugt ist hierbei, dass die von einem Diol abgeleitete Funktionalität eine von einem aliphatischen, aromatischen oder heterocyclischen Diol abgeleitete Funktionalität ist.

Gemäß beispielhaften Ausführungsformen ist die von einem Diol abgeleitete Funktionalität
a) eine von einem aliphatischen Diol abgeleitete Funktionalität und bevorzugt abgeleitet von Ethylenglycol, 1,3-Propylenglycol, 1,2-Propylenglycol, 1,4-Butandiol, 1,5-Pentandiol, 1,6-Hexandiol, 1,8-Octandiol, 1,10-Decandiol, 1, 12-Dodecandiol, 1,4-Cyclohexandiol, 1,3-Cyclohexandiol und/oder 1,4-Cyclohexandimethanol,
b) eine von einem aromatischen Diol abgeleitete Funktionalität und bevorzugt abgeleitet von Hydrochinon, Resorcin, 1,5-, 2,6- oder 2,7-Dihydroxynaphthalin, Vanillylalkohol oder den nachfolgenden Diolen 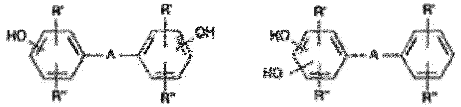 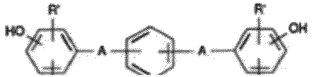 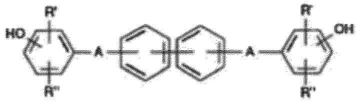 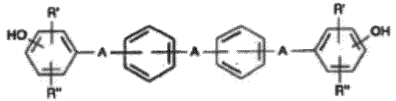 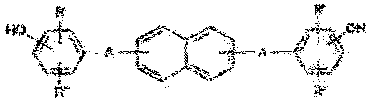 wobei jeweils unabhängig voneinander
   - A: eine direkte Bindung, -O-, -SO₂-, -C(O)-, -CH(CH₃)- oder - -C(CH₃)₂-, und
   - R' und R": bei jedem Auftreten gleich oder verschieden sind und ausgewählt sind aus der Gruppe bestehend aus linearen oder verzweigten Alkylresten mit 1 bis 36 Kohlenstoffatomen,
   bedeuten,
c) eine von einem heterocyclischem Diol abgeleitete Funktionalität und bevorzugt abgeleitet von Hydroxyethyl-4-hydroxytetramethylpiperidin, 1,4-Dithian-2,5-diol, oder
d) eine von den nachfolgenden Diolen abgeleitete Funktionalität 2,3-Dimethoxy-1,4-butandiol

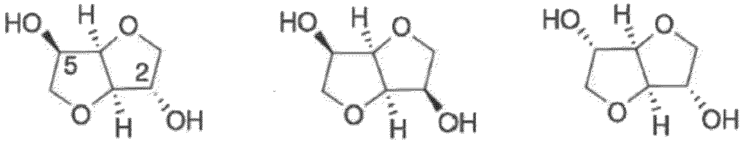

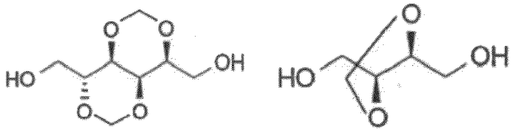

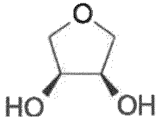

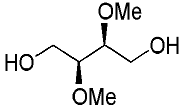

Gemäß einer weiteren Ausführungsform der vorliegenden Erfindung ist das Oligomer bzw. Copolymer ein Cooligomer bzw. Copolymer, d.h. beinhaltet mindestens zwei verschiedene Wiederholungseinheiten, die auf der Wiederholungseinheit gemäß Formel I basieren.

Eine beispielhafte Ausführungsform hiervon sieht beispielsweise vor, dass das Oligomer oder Polymer die nachfolgenden Wiederholungseinheiten gemäß Formel I, die den nachfolgenden Definitionen gemäß Formel III und Illa entsprechen:

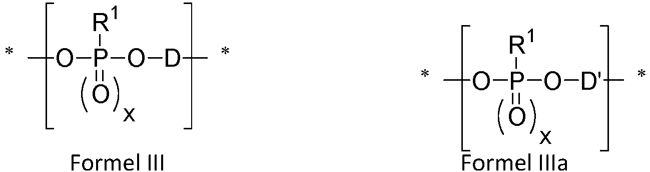

Hierbei sind R¹, D und x wie oben stehend definiert und die Definition von D' entspricht der Definition von D, mit der Maßgabe, dass D und D' von unterschiedlichen Diolen abgeleitet sind.

Beispielsweise kann die von einem Diol abgeleitete Gruppe D, wie voranstehend in Formel III verwendet, ausgewählt sein aus einem oder mehreren Diolen, wie zuvor unter a) oder b) gelistet.

Die von einem Diol abgeleitete Gruppe D' kann beispielsweise ein Diol sein, ausgewählt sein aus einem Diol, wie zuvor unter c) beschrieben.

Beispielsweise kann das molare Verhältnis der Wiederholungseinheiten III zu Illa von 0,1: 99,9 bis 50: 50, bevorzugt von 0,5: 99,5 bis 10: 90 betragen.

Bevorzugt enthält das Oligomer oder Polymer ausschließlich Wiederholungseinheiten gemäß Formel I, bei denen x = 0 ist. Alternativ ist es auch möglich, dass das Oligomer oder Polymer sowohl Wiederholungseinheiten gemäß Formel I, bei denen x = 0 ist, als auch Wiederholungseinheiten gemäß Formel I, bei denen x = 1 ist, enthält, wobei das molare Verhältnis der Wiederholungseinheiten gemäß Formel I, bei denen x = 0 ist, zu den Wiederholungseinheiten gemäß Formel I, bei denen x = 1 ist von 50:50 bis <100 : >0, bevorzugt 90:10 bis 99,9:0,1 beträgt.

Die vorliegende Erfindung betrifft zudem eine Zusammensetzung, enthaltend mindestens eine zu stabilisierende organische Komponente sowie mindestens ein erfindungsgemäßes Oligomer oder Polymer wie im Voranstehenden beschrieben.

Beispielsweise kann vorgesehen sein, dass in der Zusammensetzung mindestens ein Oligomer oder Polymer in einem Gewichtsanteil, bezogen auf die gesamte Zusammensetzung von 0,01 bis 5,0 Gew.-Teile, bevorzugt 0,02 bis 2,0 Gew.-Teile, besonders bevorzugt 0,05 bis 1,0 Gew.-Teile enthalten ist.

Eine bevorzugte Ausführungsform sieht vor, dass die mindestens eine zu stabilisierende organische Komponente ausgewählt ist aus der Gruppe bestehend aus
- Kunststoffen (synonym "Polymere"), insbesondere thermoplastischen, elastomeren oder duromeren Kunststoffen,
- mindestens ein Öl, Fett oder Wachs, insbesondere Mineralöle, Pflanzenfette bzw. -öle oder Tierfette bzw. -öle, z.B. Palmöl, Olivenöl, Rapsöl, Leinöl, Sojabohnenöl, Sonnenblumenöl, Rizinusöl, Fischöle oder Rindertalg sowie Öle, Fette oder Wachse auf der Basis von z.B. synthetischen Estern,
- mineralischen oder synthetischen Schmierstoffen, Hydraulikölen, Motorenölen, Turbinenölen, Getriebeölen, Metallbearbeitungsflüssigkeiten oder Schmierfetten, sowie
- polymerisationsfähigen Monomeren, insbesondere radikalisch polymerisationsfähige Monomere, insbesondere Monomere, die radikalisch durch Initiatoren wie z.B. Peroxide oder auch Sauerstoff polymerisiert werden können wie z.B. Acrylester, Methacrylester, Acrylnitril, Styrole oder Vinylchlorid.

Geeignete thermoplastische oder duromere Polymere sind insbesondere:
a) Polymeren aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, wie z.B. auch Naturkautschuk (NR), Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM mit z.B. 5-Ethyliden-2-Norbornen als Comonomer, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidyl(meth)acrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylatgraft-Maleinsäureanhydrid sowie Blends wie z.B. LDPE/LLDPE oder auch langkettenverzweigte Polypropylen-Copolymere die mit alpha-Olefinen als Comonomere hergestellt werden wie z.B. mit 1-Buten, 1-Hexen, 1-Octen oder 1-Octadecen
b) Polystyrol, Polymethylstyrol, Poly-alpha-methylstyrol, Polyvinylnaphthalin, Polyvinylbiphenyl, Polyvinyltoluol, Styrol-Butadien (SB), Styrol-Butadien-Styrol (SBS), Styrol-Ethylen-Butylen-Styrol (SEBS), Styrol-Ethylen-Propylen-Styrol, Styrol-Isopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS), sowie hydrierte Polystyrol-Derivate wie z.B. Polyvinylcyclohexan
c) halogenenthaltenden Polymeren wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO)
d) Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat,
e) Polymeren aus ungesättigten Alkoholen und Derivaten, wie z.B. Polyvinylalkohol, Polyvinylacetat, Polyvinylbutyral, Polyallylphthalat, Polyallylmelamin
f) Polyacetalen, wie z.B. Polyoxymethylen (POM) oder Copolymere mit z.B. Butanal,
g) Polyphenylenoxiden und Blends mit Polystyrol oder Polyamiden,
h) Polymeren von cyclischen Ethern wie z.B. Polyethylenglycol, Polypropylenglycol, Polyethylenoxid, Polypropylenoxid, Polytetrahydrofuran,
i) Polyurethanen, aus hydroxyterminierten Polyethern oder Polyestern und aromatischen oder aliphatischen Isocyanaten wie z.B. 2,4- oder 2,6-Toluylendiisocyanat oder Methylendiphenyldiisocyanat insbesondere auch lineare Polyurethane (TPU), Polyharnstoffen,
j) Polyamiden wie z.B. Polyamid-6, 6.6, 6.10, 4.6, 4.10, 6.12, 10.10, 10.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen wie z.B. Hexamethylendiamin oder m-Xylylendiamin oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP
k) Polyimiden, Polyamid-imiden, Polyetherimiden, Polyesterimiden, Poly-(ether)ketonen, Polysulfonen, Polyethersulfonen, Polyarylsulfonen, Polyphenylensulfiden, Polybenzimidazolen, Polyhydantoinen,
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat (PTT), Polyethylennaphthylat (PEN), Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV), Polyethylensuccinat, Polytetramethylensuccinat, Polycaprolacton
m) Polycarbonaten, Polyestercarbonaten, sowie Blends wie z.B. PC/ABS, PC/PBT, PC/PET/PBT, PC/PA
n) Cellulosederivaten wie z.B. Cellulosenitrat, Celluloseacetat, Cellulosepropionat, Cellulosebutyrat,
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze,
r) Silikonen, z.B. auf der Basis von Dimethylsiloxanen, Methyl-Phenyl-siloxanen oder Diphenylsiloxanen z.B. Vinylgruppen terminiert
s) sowie Mischungen, Kombinationen oder Blends aus zwei oder mehr der zuvor genannten Polymere.

Sofernessich beiden untera) bis r)angegebenen Polymeren umCopolymere handelt, können diese in Form von statistischen ("random"), Block-oder "tapered" Strukturenvorliegen.

Weiterhin können die genannten Polymeren in Form von linearen, verzweigten, sternförmigen oder hyperverzweigten Strukturen vorliegen.

Sofern es sich bei den unter a) bis r) angegebenen Polymeren um stereoreguläre Polymere handelt, können diese in Form von isotaktischen, stereotaktischen, aber auch ataktischen FormenoderalsStereo-blockcopolymerevorliegen.

Weiterhin können die untera) bis r)angegebenen Polymere sowohl amorphe als auch (teil-) kristalline Morphologien aufweisen.

Ggf. können die unter a) genannten Polyolefine auch vernetzt vorliegen, z.B. vernetztes Polyethylen, das dann alsX-PE bezeichnet wird.

Weiterhin können die vorliegenden Verbindungen zur Stabilisierung von Kautschuken und Elastomeren eingesetzt werden. Hier kann es sich um Naturkautschuk (NR) oder synthetische Kautschukmaterialien handeln. Weitere geeignete Kautschuke und Elastomere sind insbesondere Butadienkautschuk (BR), Styrolbutadienkautschuk (SBR), Chlorbutadienkautschuk (CR), Acrylnitrilbutadienkautschuk (NBR), Hydrierter Acrylnitrilbutadienkautschuk (HNBR), Ethylen-Propylen-Dien-Kautschuk (EPDM), Butylkautschuk (IIR), Ethylen-Epichlorhydrin-Kautschuk (ECO) oder Ethylenacrylatkautschuk (AEM).

Weiterhin bevorzugt sind insbesondere Polymere aus nachwachsenden Rohstoffen wie z.B.Polymilchsäure (PLA), Polyhydroxybuttersäure, Polyhydroxyvaleriansäure, Polybutylensuccinat (PBS) oder Polybutylensuccinat-co-adipat (PBSA).

Eine weitere beispielhafte Ausführungsform der erfindungsgemäßen Zusammensetzung sieht vor, dass die Zusammensetzung mindestens einen Zusatzstoff ausgewählt aus der Gruppe bestehend aus primären Antioxidantien, sekundären Antioxidantien, UV-Absorber, der Lichtstabilisatoren, der Metalldesaktivatoren, der Füllstoffdesaktivatoren, der Antiozonantien, Nukleierungsmitteln, Antinukleierungsmitteln, Schlagzähigkeitsverbesserer, Weichmacher, Gleitmitteln, Rheologie-modifikatoren, Thixotropiemitteln, Kettenverlängerer, Verarbeitungshilfsmitteln, Entformungshilfsmitteln, Flammschutzmitteln, Pigmenten, Farbstoffen, optische Aufhellern, antimikrobielle Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobierungsmitteln, Haftvermittler, Dispergiermitteln, Kompatibilisatoren, Sauerstofffänger, Säurefänger, Treibmitteln, Prodegradantien , Entschäumungshilfsmitteln, Geruchsfängern, Markierungsmitteln, Antifoggingmitteln, Füllstoffen und Verstärkungsstoffen enthält.

In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Aluminumstearat, Calciumlaurat, Calciumlactat, Calciumstearoyl-2-lactylat oder von Hydrotalciten, insbesondere synthetische Hydrotalcite auf Aluminium-, Magnesium- und Zinkbasis, sowie Hydrocalumite, Zeolithe und/oder Erdalkalioxide wie z.B. Calciumoxid und Magnesiumoxid und/oder Erdalkalicarbonate wie Calciumcarbonat, Magnesiumcarbonat oder Dolomit und/oder Hydroxide wie Brucit.

In weiterhin bevorzugter Ausführungsform enthalten die Zusammensetzungen Lichtstabilisatoren aus der Gruppe der gehinderten Amine (HALS) und/oder Dispergiermittel und/oder Füllstoffdeaktivatoren.

Geeignete primäre Antioxidantien (A) sind phenolische Antioxidantien, Amine und Lactone. Weiterhin kommt Ascorbinsäure als primäres Antioxidans in Frage.

Geeignete synthetische phenolische Antioxidantien sind beispielsweise:
Alkylierte Monophenole, wie z.B. 2,6-Di-*tert*-butyl-4-methylphenol, *2-tert-*Butyl-4,6-dimethylphenol, 2,6-Di-*tert*-butyl-4-ethylphenol, 2,6-Di-tert-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethylphenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-secamylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-tert-butylphenol), 2,2'-Ethylidenbis(4,6-di-*tert*-butylphenol), 2,2'-Ethylidenbis(6-*tert-*butyl-4-isobutylphe-nol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-*tert*-butylphenol, 4,4'-Methylenbis(6-*tert*-butyl-2-methyl-phenol), 1,1-bis(5-*tert*-butyl-4-hydroxy-2-methylphenyl)butan, 2,6-Bis(3-*tert-*butyl-5-methyl-2-hydroxybenzyl)-4-methylphenol, 1,1,3-Tris(5-*tert*-butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-*tert*-butyl-4'-hydroxyphenyl)butyrat], Bis(3-*tert*-butyl-4-hydroxy-5-methylphenyl)dicyclopentadien, Bis[2-(3'-*tert*-butyl-2'-hydroxy-5'-methylbenzyl)-6-*tert*-butyl-4-methylphenyl]terephthalat, 1,1-Bis-(3,5-dimethyl-2-hydroxyphenyl)butan, 2,2-Bis-(3,5-di-*tert*-butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert*-butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzylmercaptoacetat, Tridecyl-4-hydroxy-3,5-di-*tert*-butylbenzyl-mercaptoacetat, Tris(3,5-di-*tert*-butyl-4-hydroxybenzyl)amin, Bis(4-*tert*-butyl-3-hydroxy-2,6-dimethylbenzyl)dithioterephthalat, Bis(3,5-di-*tert*-butyl-4-hydroxybenzyl)sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)-malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis-(3,5-di-tert-butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-*tert*-butyl-4-hydroxyphe-noxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert-*butyl-4-hydroxphenylethyl)-1,3,5-tria-zin, 1,3,5-Tris(3,5-di-*tert*-butyl-4-hydroyphenylpropionyl)hexahydro-1,3,5-triazin, 1,3,5-Tris(3,5-dicyc-lohexyl-4-hydroxybenzyl)isocyanurat;
Benzylphosphonate, wie z.B. Dimethyl-2,5-di-*tert*-butyl-4-hydroxybenzylphosphonat, Dietyhl-3,5-di-*tert*-butyl-4-hydroxybenzylphosphonat, Dioctadecyl-3,5-di-*tert*-butyl-4-hydroxybenzylphosphonat, Di-octadecyl-5-*tert*-butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert-*butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-i-eri--butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris-(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der (3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)-hexamethylendiamid, N,N'-Bis(3,5-di-*tert*-butyl-4-hydroxyphenylpropionyl)hexamethylendiamid, N,N'-Bis-(3,5-di-*tert*-butyl-4-hydroxyphenylpropionyl)hydrazid, N,N'-Bis[2-(3-[3,5-di-*tert*-butyl-4-hy-droxyphenyl]propionyloxy)ethyl]oxamid (Naugard^{®}XL-1, vertrieben durch Uniroyal);
Besonders bevorzugte phenolische Antioxidantien sind:

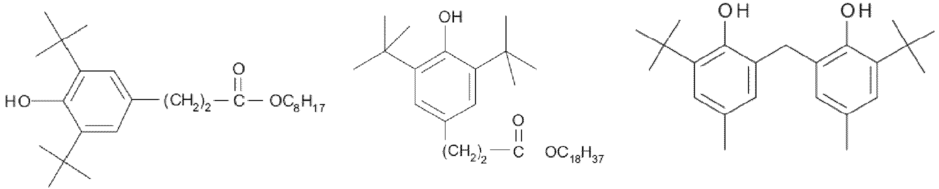

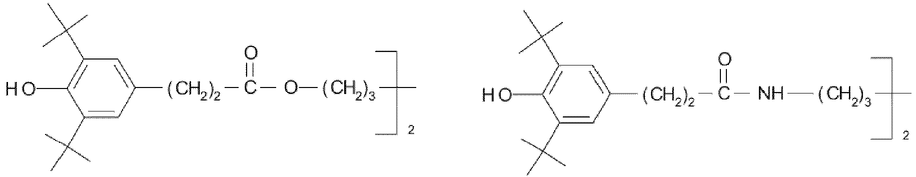

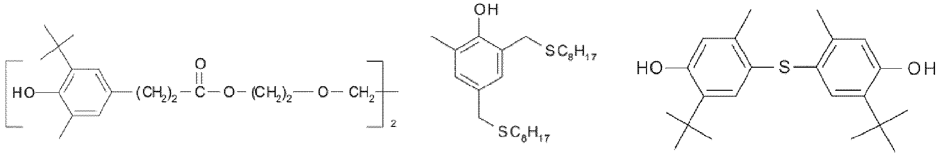

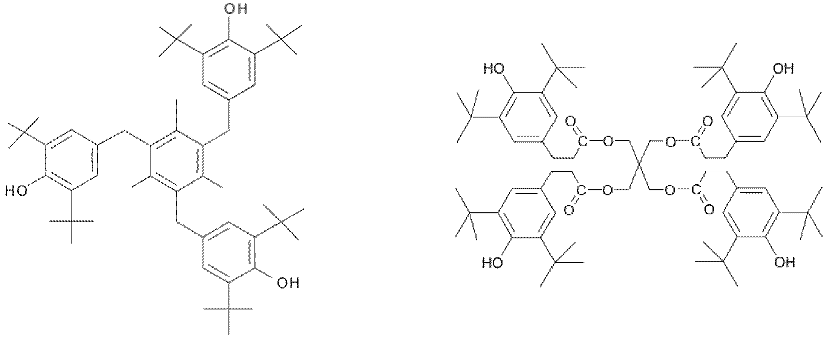

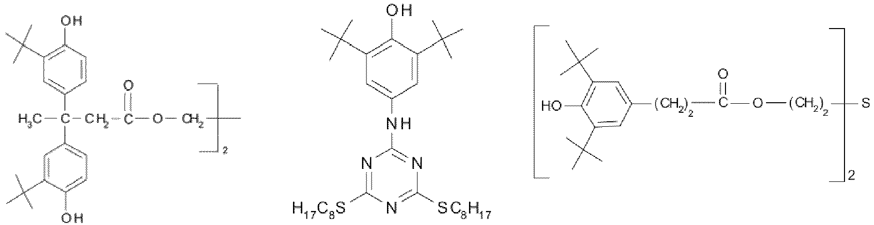

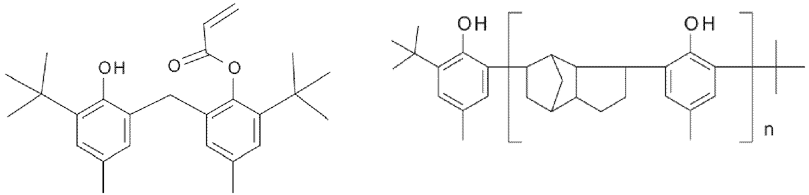

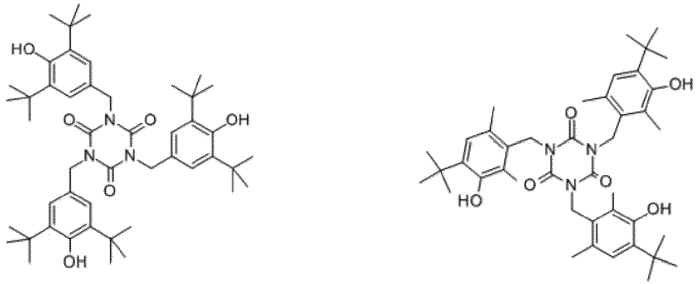

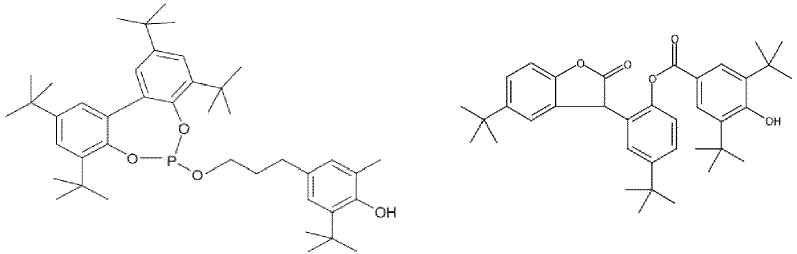

Geeignete aminische Antioxidantien sind beispielsweise:
N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methylpentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethyl-butyl)-N'-phenyl-p-phenylen-diamin, N-(1-Methylheptyl)-N'-phenyl-p-phenylendia-min, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)phenyl]amin, *tert*octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten tert-Butyldiphenylaminen, 2,3-Dihydro-3,3-dimethyl-4H-1,4-benzothiazin, Phenothiazin, ein Gemisch aus mono- und dialkylierten *tert*-Butyl/tert-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere bevorzugte aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearyl-hydroxylamin, N-Benzyl-α-phenylnitron, N-Octadecyl-α-hexadecylnitron, sowie Genox EP (SI Group) gemäß der Formel:

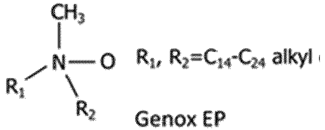

Geeignete Lactone sind Benzofuranone und Indolinone wie z.B. 3-(4-(2-acetoxyethoxy)phenyl]-5,7-di-tert-butyl-benzofuran-2-on, 5,7-di-tert-butyl-3-[4-(2-stearoyloxyethoxy)phenyl]benzofuran-2-on, 3,3'-bis[5,7-di-tert-butyl-3-(4-(2-hydroxyethoxy]phenyl)benzofuran-2-on), 5,7-di-tert-butyl-3-(4-etho-xy-phenyl)benzofuran-2-on, 3-(4-acetoxy-3,5-dimethylphenyl)-5,7-di-tert-butyl-benzofuran-2-on, 3-(3,5-dimethyl-4-pivaloyloxyphenyl)-5,7-di-tert-butyl-benzofuran-2-on, 3-(3,4-dimethylphenyl)-5,7-di-tert-butyl-benzofuran-2-on, 3-(2,3-di methylphenyl)-5,7-di-tert-butyl-benzofuran-2-on.

Geeignete sekundäre Antioxidantien sind Phosphorverbindungen wie z.B. Phosphite und Phosphonite, und Organo-Schwefelverbindungen wie z.B. Sulfide und Disulfide.

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldi-phosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

Besonders bevorzugte Phosphite/Phosphonite sind:

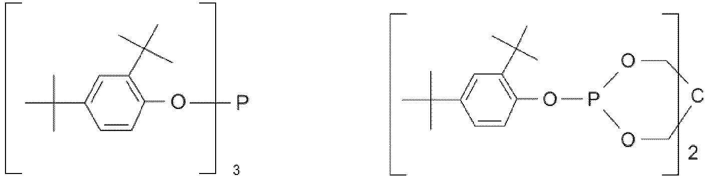

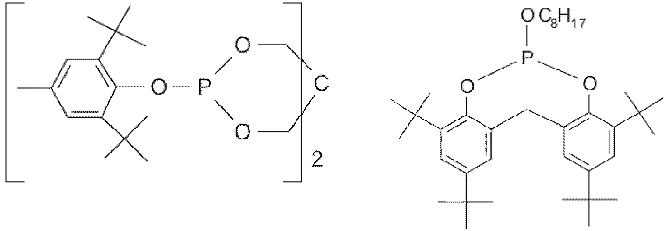

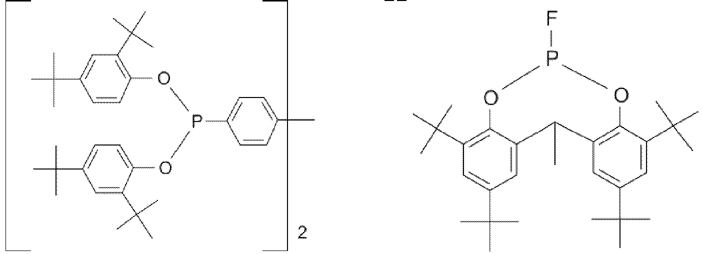

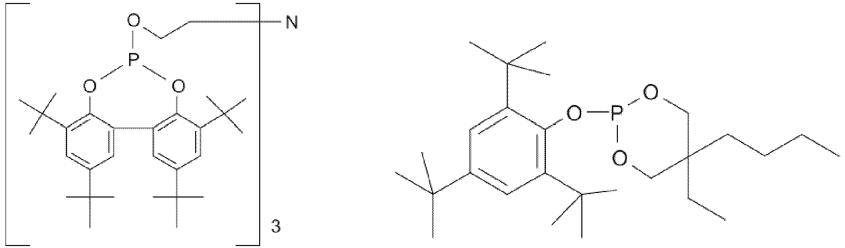

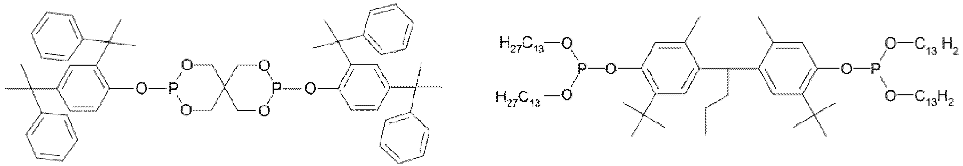

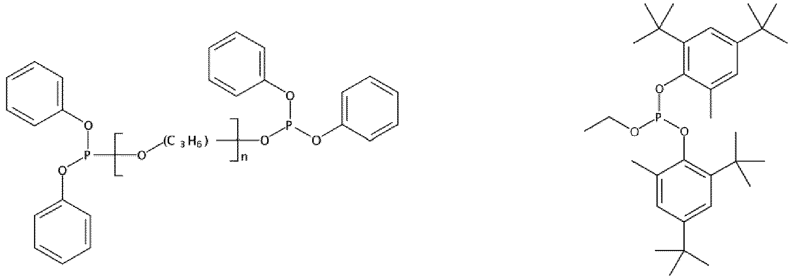

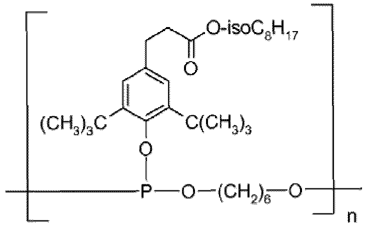

Geeignete Schwefelverbindungen sind beispielsweise Distearylthiodipropionat, Dilaurylthiodipro-pionat; Ditridecyldithiopropionat, Ditetradecylthiodipropionat, 3-(dodecylthio)-, 1,1'-[2,2-bis[[3-(dodecylthio)-1-oxopropoxy]methyl]-1,3-propandiyl]propansäureester.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methyl-phenyl)benzotriazol, 2-(3',5'-Di-*tert*-butyl-2'-hydroxyphenyl)-benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert*-butyl-2'-hydroxyphenyl)-5-chlorobenzotriazol, 2-(3'-*tert*-Butyl-2'-hydroxy-5'-methylphenyl-5-chloro-benzotriazol, 2-(3'-sec-Butyl-5'-*tert*-butyl-2'-hydroxy-phenyl)benzotriazol, 2-(2'-Hydroxy-4'-octyloxy-phenyl)benzotriazol, 2-(3',5'-Di-*tert*-amyl-2'-hydroxyphenyl)benzotriazol, 2-(3',5'-Bis(α,α-dimethyl-benzyl)-2'-hydroxyphenyl)benzotriazol, 2-(3'-*tert*-Butyl-2'-hydroxy-5'-(2-octyl-oxy-carbonyl-ethyl)phe-nyl)-5-chlorobenzotriazol, 2-(3'-*tert*-Butyl-5'-[2-(2-ethylhexyloxy)-carbonyl-ethyl]-2'-hydroxyphenyl)-5-chlorobenzotriazol, 2-(3'-*tert*-Butyl-2'-hydroxy-5'-(2-methoxycarbonyl-ethyl)phenyl)-5-chlorobenzo-triazol, 2-(3'-*tert*-Butyl-2'-hydroxy-5'-(2-methoxycarbonylethyl)phenyl)-benzotriazol, 2-(3'-*tert*-Butyl-2'-hydroxy-5'-(2-octyloxycarbonylethyl)phenyl)benzotriazol, 2-(3'-*tert*-Butyl-5'-[2-(2-ethylhexyloxy)-carbonylethyl]-2'-hydroxyphenyl)benzotriazol, 2-(3'-Dodecyl-2'-hydroxy-5'-methylphenyl)benzotri-azol, 2-(3'-*tert*-Butyl-2'-hydroxy-5'-(2-isooctyloxycarbonylethyl)phenylben-zotriazol, 2,2'-Methylen-bis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂-₂, wobei R = 3'-*tert*-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]-benzotriazol, 2-[2'-hydroxy-3'-(1,1,3,3-tetramethylbutyl)-5'-(α,α-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy-4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbo-methoxy-β-cyanovinyl)-2-methylindolin.

Geeignete Ester von Benzoesäuren sind beispielsweise 4-tert-Butylphenylsalicylat, Phenylsalicylat, Octylphenylsalicylat, Dibenzoylresorcinol, Bis(4-tert-butylbenzoyl)resorcinol, Benzoylresorcinol, 2,4-Di-*tert*-butylphenyl-3,5-di-tert-butyl-4-hydroxybenzoat, Hexadecyl-3,5-di-*tert*-butyl-4-hydroxyben-zo-at, Octa-decyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert-*butoxanilid, 2-Ethoxy-2'-ethyloxanilid, N,N'-Bis(3-dimethylaminopropyl)oxa-mid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxy-disubstituierten Oxaniliden und Mischungen von o- und p-Ethoxy-disubstituierten Oxaniliden.

Geeignete 2-(2-Hydroxyphenyl)-1,3,5-Triazine sind beispielsweise 2,4,6-Tris(2-hydroxy-4-octyloxy-phenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxy-phenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hy-droxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxy-propyloxy)phenyl]-4,6-bis(2,4-dimethyl)-1,3,5-triazin, 2-[4-(Dodecyloxy/Tridecyloxy-2-hydroxy-propoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-tria-zin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxy-propyl-oxy]phenyl}-4,6-bis(2,4-dimethylphenyl-1,3,5-triazin.

Geeignete Metalldeaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)-hydrazin, 3-Salicyloylamino-1,2,4-triazol, Bis(benzyliden)oxalyldihydrazid, Oxanilid, Isophthaloyldihy-drazid, Sebacoylbisphenylhydrazid, N,N'-Diacetyladipoyldihydrazid, N,N'-Bis(salicyloyl)oxylyldihydrazid, N,N'-Bis(salicyloyl)thiopropionyldihydrazid.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxy-piperidin und Succinsäure, lineare oder zyklische Kondensationsprodukte von N,N'-Bis(2,2,6,6-tetramethyl-4-piperidyl)hexame-thylendiamin und 4-tert-Octylamino-2,6-dichloro-1,3,5-triazin, Tris(2,2,6,6-tetramethyl-4-piperidyl)-nitrilotriacetat, Tetrakis(2,2,6,6-tetramethyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Besonders bevorzugte gehinderte Amine sind die folgenden:

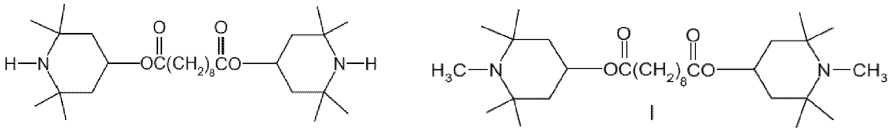

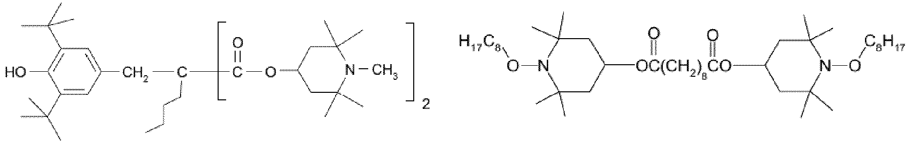

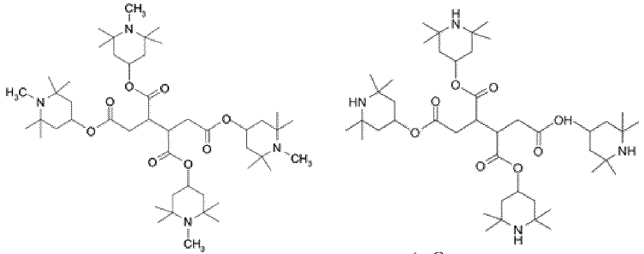

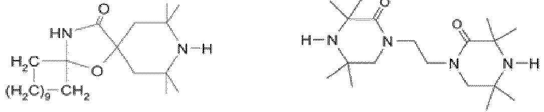

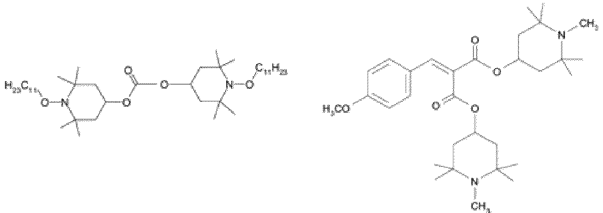

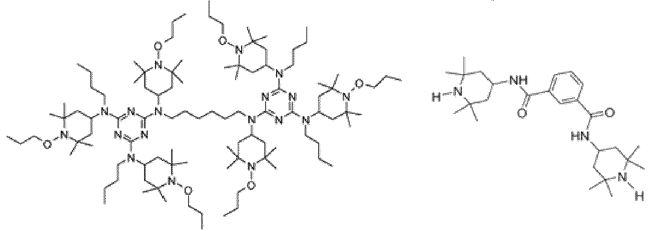

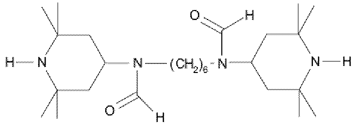

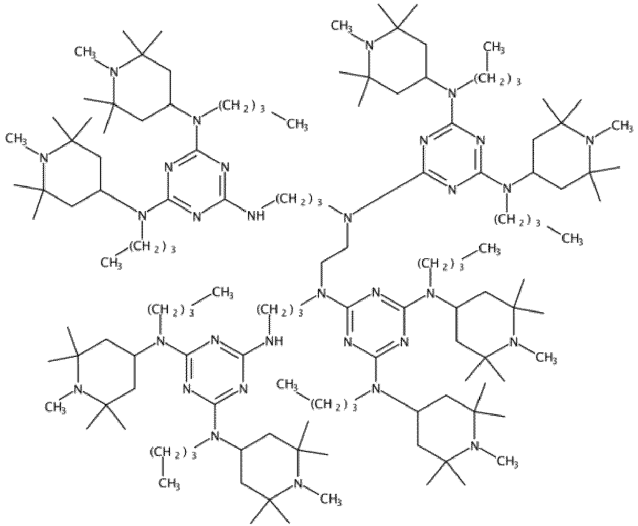

Bevorzugte oligomere und polymere gehinderte Amine weisen die folgenden Strukturen auf: 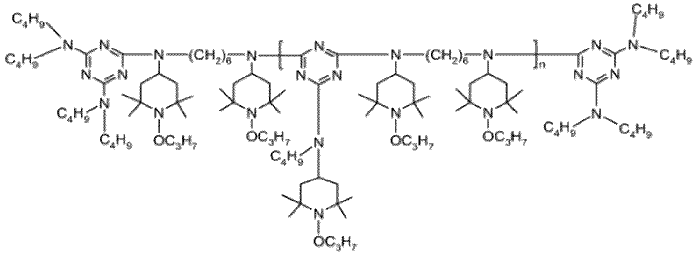 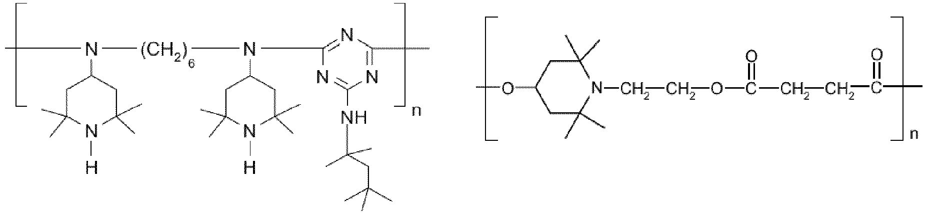 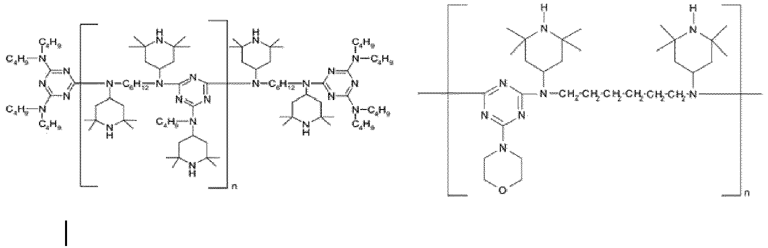 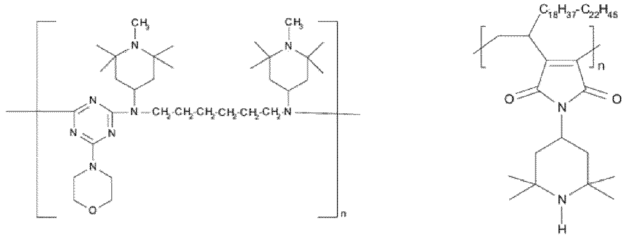 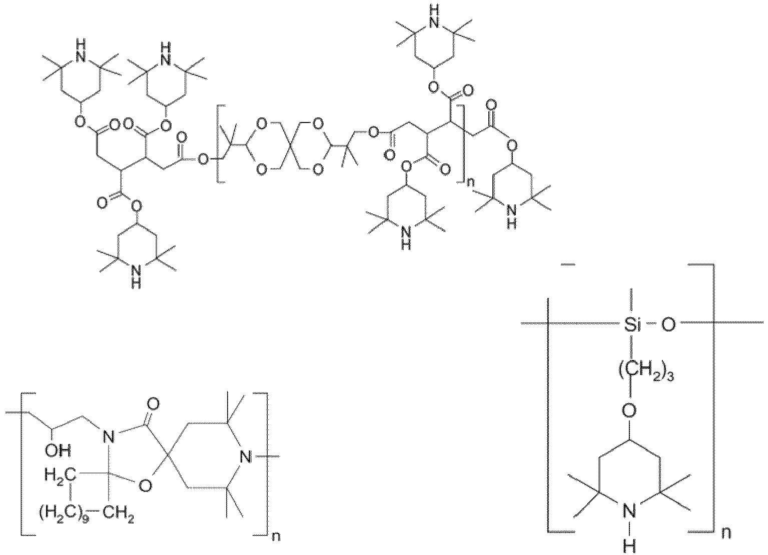 wobei bei den zuvor genannten Verbindungen n jeweils eine ganze Zahl von 3 bis 100 darstellt.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminiumhydroxy-bis(4-*tert*-butyl)benzoat, Benzylidensorbitole wie z.B. 1,3:2,4-Bis(benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide und Diamide wie z.B. Trimesinsäuretricyclohexylami, Trimesinsäuretri(4-methylcyclohexylamid), Trimesinsäure tri(tert.butylamid), N,N',N"-1,3,5-Benzoltriyltris(2,2-dimethyl-propanamid) oder 2,6-Naphthalindicarbosäuredicyclohexylamid.

Geeignete Antinukleierungsmittel sind Azinfarbstoffe wie z.B. Nigrosin.

Geeignete Flammschutzmittel sind beispielsweise:
a) Anorganische Flammschutzmittel wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, SbzOs, MoOs, Zinkstannat, Zinkhydroxystannat,
b) Stickstoffhaltige Flammschutzmittel wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melamin-Metall-Phosphate wie z.B. Melaminaluminumphosphat, Melaminzinkphosphat, Melaminmagnesiumphopsphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid,
c) Radikalbildner, wie z.B. Alkoxyamine, Hydroxylaminester, Azoverbindungen, Dicumyl oder Polycumyl, Hydroxyimide und deren Derivate wie z.B. Hydroxyimidester oder Hydroxyimidether
d) Phosphorhaltige Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
e) Halogenhaltige Flammschutzmittel auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Ethylen-bis(tetrabromophthalimid), Tetrabromo-bisphenol A, bromiertes Polystyrol, bromiertes Polybutadien bzw, Polystyrol-bromiertes Polybutadien-Copolymere, bromierter Polyphenylenether, bromiertes Epoxidharz, Polypentabrombenzylacrylat, ggf. in Kombination mit Sb₂O₃ und/oder SbzOs,
f) Borate wie z.B. Zinkborat oder Calciumborat, ggf. auf Trägermaterial wie z.B. Silica
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) Siliciumhaltige Verbindungen wie z.B. Polyphenylsiloxane,
j) Kohlenstoffmodifikationen wie z.B.Carbon-Nanoröhren (CNT) oder Graphen
sowie Kombinationen oder Mischungen hieraus.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrene, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete optische Aufheller sind beispielsweise Bisbenzoxazole, Phenylcumarine oder Bis(styryl)biphenyle und insbesondere optische Aufheller der Formeln:

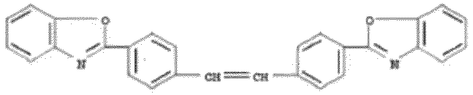

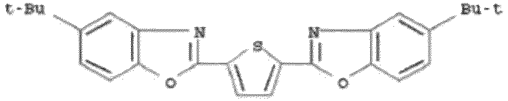

Geeignete Füllstoffdeaktivatoren sind beispielsweise Polysiloxane, Polyacrylate insbesondere Blockcopolymerewie Polymethacrylsäure-polyalkylenoxid oder Polyglycidyl(meth)acrylate und deren Copolymere z.B. mit Styrol sowie Epoxidez.B. derfolgenden Strukturen:

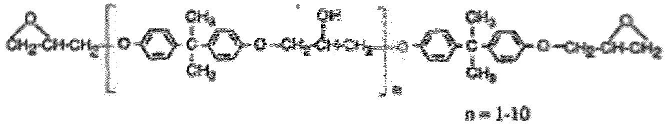

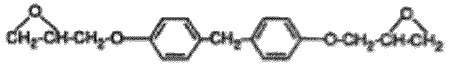

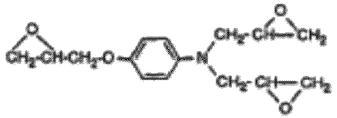

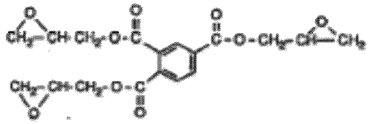

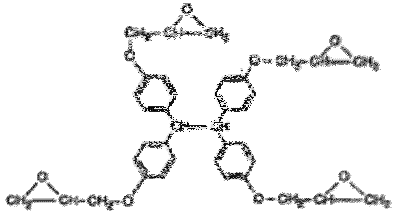

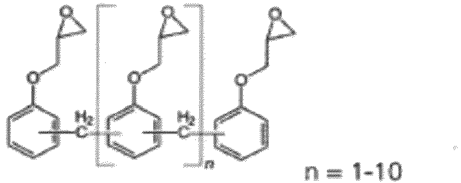

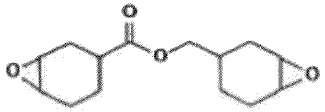

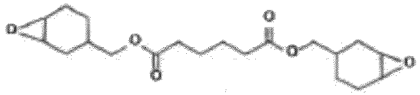

Geeignete Antistatika sind beispielsweise ethoxylierte Alkylamine, Fettsäureester, Alkylsulfonate und Polymere wie z.B. Polyetheramide.

Geeignete Antiozonantien sind die oben genannten Amine wie z.B. N,N'-Diisopropyl-p-phenylendiamin, N,N'-Di-sec-butyl-p-phenylendiamin, N,N'-Bis-(1,4-dimethylpentyl)-p-phenylendiamin, N,N'-Dicyclohexyl-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin

Geeignete Additive zum Molekulargewichtsaufbau von Polykondensationspolymeren (Kettenverlängerer) sind Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z. B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Additive zur Erhöhung der elektrischen Leitfähigkeit sind beispielsweise die erwähnten Antistatika, Ruß und Kohlenstoffverbindungen wie Kohlenstoff-Nanoröhrchen und Graphen, Metallpulver wie z.B. Kupferpulver und leitfähige Polymere wie bsp. Polypyrrole, Polyaniline und Polythiophene. Geignete Additive zur Erhöhung der thermischen Leitfähigkeit sind beispielsweise Aluminumnitride und Bornitride.

Geeignete Infrarot-aktive Additive sind beispielsweise Aluminumsilikate, Hydrotalcite oder Farbstoffe wie Phthalocyanine oder Anthrachinone.

Geeignete Entformungshilfsmittel sind beispielsweise Silikone, Seifen und Wachse wie z.B. Montanwachse.

Geeignete Schlagzähigkeitsverbesserer sind z.B. Ethylen-Copolymere mit Acrylaten, Methacrylaten und/oder ethylenisch ungesättigten Carbonsäuren, die ganz oder teilweise z.B. mit Zink neutralisiert sein können oder Copolymere aus Ethylen, Propylen und Dienen, sowie Kern-Schale-Partikel z.B. aus Polybutylacrylat und Polymethylmethacrylat.

Kompatibilisatoren oder Verträglichkeitsmacher werden beispielsweise bei thermodynamisch nicht mischbaren Blends oder auch bei Rezyklatmischungen eingesetzt und enthalten Strukturelemente der jeweiligen Blendkomponenten, die gemischt werden. Geeignete Kompatibilisatoren für Polyolefin-Mischungen sind beispielsweise Olefin-Blockcopolymere, bestend aus Ethylen, Propylen und alpha-Olefinen wie z:B. 1-Octen. Andere Kompatibilisatoren insbesondere zur Kompatibilisierung von polaren, wie PET oder Polyamide und unpolaren, wie PP oder PE Polymeren sind beispielsweise Polypropylen-g- Maleinsäureanhydrid, Polyethylen-g-Maleinsäureanhydrid, Polypropylen-g-Acrylsäure, Polyethylen-g-Acrylsäure, Poly(ethylen-co-maleinsäureanhydrid), SBS-g-Malainsäureanhydrid oder SEBS-g-Maleinsäureanhydrid.

Geeignete Vernetzungsmittel sind beispielsweise Peroxide wie Dialkylperoxide, Alkyl-aryl-peroxide, Peroxyester, Peroxycarbonate, Diacylproxide, Peroxyketale, Silane wie z.B. Vinyltrimethoxysilan, Vinyltriethoxysilan, Vinyltriacetoxysilan, Vinyltris(2-methoxyethoxy)silan, 3-Methacryloyloxypropyltrimethoxysilan, Vinyldimethoxymethylsilan oder Ethylen-Vinylsilan-Copolymere.

Geeignete Prodegradantien sind Additive, die einen Abbau eines Polymeren in der Umwelt gezielt beschleunigen oder kontrollieren. Beispiele sind Übergangsmetallfettsäureester, z.B. von Mangan oder Eisen, die einen oxidativen und/oder photooxidativen Abbau z.B. von Polyolefinen beschleunigen oder Enzyme, die einen hydrolytischen Abbau z.B. von aliphatischen Polyestern induzieren.

Geeignete chemische Treibmittel sind beispielsweise Azoverbindungen wie Azodicarbonsäurediamid, Sulfonylsemicarbazide wie p-Toluolsulfonylsemicarbazid, Tetrazole wie 5-Phenyltetrazol, Hydrazide wie p-Toluolsulfonylhydrazid, 4,4'-Oxibis(benzolsulfonyl)hydrazid, N-Nitrosoverbindungen wie N,N'-Dinitrosopentamethylentetramin oder Carbonate wie z.B. Natriumhydrogencarbonat oder Zinkcarbonat.

Geeignete Slip-Agents sind beispielsweise Amidwachse wie Erucasäureamid oder Ölsäureamid.

Geeignete Antiblock-Mittel sind beispielsweise Silica, Talk oder Zeolithe.

Geeignete Antifogging-Additive sind beispielsweise ethoxylierte Sorbitanester, ethoxylierte Fettsäurealkohole oder ethoxylierte Alkylaminester.

Geeignete Biozide sind beispielsweise quaternäre Ammoniumsalze oder Silbersalze, kolloidales Silber oder Silberkomplexe oder auch Naturstoffderivate wie bsp. Chitosan

Geeignete Aldehyd-Scavenger sind Amine, Hydroxylamine, Polyvinylalkohol, Zeolithe oder Cyclodextrine, geeignete Formaldehyd-Scavenger sind Melaminderivate wie z.B. Benzoguanamin oder Harnstoffderivate wie Allantoin.

Geeignete geruchsbindende oder geruchsverhindernde Substanzen sind Silikate wie Calciumsilikat, Zeolithe oder Salze von Hydroxyfettsäuren wie z.B. Zinkriceneolat.

Geeignete Markierungsmittel sind beispielsweise Fluoreszenzfarbstoffe oder seltene Erden.

Geeignete Entformungshilfsmittel sind beispielsweise Montanwachse.

Weiterhin betrifft die vorliegende Erfindung die Verwendung eines erfindungsgemäßen Oligomers oder Polymers als Stabilisator für organische Materialien.

Insbesondere können die Oligomere oder Polymere gemäß der vorliegenden Erfindung als Stabilisator gegen
- thermischen, aktinischen oder oxidativen Abbau von Kunststoffen, oder als Flammschutzmittel für Kunststoffe,
- thermischen, aktinischen oder oxidativen Abbau von Ölen, Fetten oder Wachen, insbesondere Mineralölen, Pflanzenfetten bzw. -ölen oder Tierfetten bzw. -ölen, z.B. Palmöl, Olivenöl, Rapsöl, Leinöl, Sojabohnenöl, Sonnenblumenöl, Rizinusöl, Fischöle oder Rindertalg sowie Ölen, Fetten oder Wachsen auf der Basis von z.B. synthetischen Estern,
- thermischen, aktinischen oder oxidativen Abbau von mineralischen oder synthetischen Schmierstoffen, Hydraulikölen, Motorenölen, Turbinenölen, Getriebeölen, Metallbearbeitungsflüssigkeiten oder Schmierfetten, oder
- gegen vorzeitige Polymerisation und/oder Oxidation von polymerisationsfähigen Monomeren, insbesondere Monomere, die radikalisch durch Initiatoren wie z.B. Peroxide oder auch Sauerstoff polymerisiert werden können wie z.B. Acrylester, Methacrylester, Acrylnitril, Styrole oder Vinylchlorid.
verwendet werden.

Beispielsweise eignen sich die Oligomere oder Polymere gemäß der vorliegenden Erfindung als Stabilisatoren für Kunststoffe in Form von Spritzgussteilen, Folien oder Filmen, Schäumen, Fasern, Kabeln und Rohren, Profilen, Hohlkörper, Bändchen, Membranen, wie z.B. Geomembranen, oder Klebstoffen, die über Extrusion, Spritzguss, Blasformen, Kalandrieren, Pressverfahren, Spinnprozesse, Rotomoulding hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Ein weiterer Einsatzbereich sind Lacke, Farben und Beschichtungen (Coatings), sowie die Stabilisierung von Ölen, Fetten und Schmierstoffen gegen thermischen, aktinischen oder oxidativen Abbau oder als Flammschutzmittel.

Beschrieben wird ebenso ein Intermediat, das sich für die Herstellung eines erfindungsgemäßen Oligomers oder Polymers eignet. Das Intermediat weist dabei die nachfolgende allgemeine Formel IV auf: 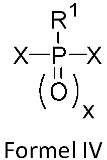 wobei R¹ und x wie oben definiert sind und
- X: bei jedem Auftreten gleich oder verschieden sind und eine Abgangsgruppe darstellt, insbesondere ausgewählt ist aus der Gruppe bestehend aus Cl, Br, und I.

### Verfahren zur Stabilisierung

Bevorzugt wird das erfindungsgemäße Additiv, das als Pulver, Flüssigkeit, Öl, kompaktiert, auf einem Trägermaterial, als Granulat, Lösung oder Schuppen vorliegen kann mit dem zu stabilisierenden Polymeren gemischt, die Polymermatrix in die Schmelze überführt und anschließend abgekühlt. Alternativ hierzu istesebensomöglich,dasAdditivineinem schmelzflüssigen Zustand in eine Polymerschmelze einzubringen.

Für den Fall, dass der Polymerzusammensetzung weitere Bestandteile zugefügt werden, können diese separat, in Form von Flüssigkeiten, Pulvern, Granulaten oder kompaktierten Produkten oder zusammen mit der erfindungsgemäßen Additivzusammensetzung wie zuvor beschrieben den Polymeren zugesetzt werden.

Die Einarbeitung der oben beschriebenen Additivzusammensetzung und ggf. der zusätzlichen Additive in den Kunststoff erfolgt durch übliche Verarbeitungsmethoden, wobei das Polymere aufgeschmolzen und mit der erfindungsgemäßen Additivzusammensetzung und den ggf. weiteren Zusätzen gemischt wird, vorzugsweise durch Mischer, Kneter und Extruder. Als Verarbeitungsmaschinen bevorzugtsind Extruder wie z.B. Einschneckenextruder, Zweischneckenextruder, Planetwalzenextruder, Ringextruder, Co-Kneter, dievorzugsweise mit einer Vakuumentgasung ausgestattet sind. Die Verarbeitung kann dabei unter Luft oder ggf. unter Inertgasbedingungen erfolgen.

Weiterhin können die erfindungsgemäßen Additivzusammensetzungen in Form von sogenannten Masterbatchen oder Konzentraten, die beispielsweise 10-90 % der erfindungsgemäßen Zusammensetzungen in einem Polymeren enthalten, hergestellt und eingebracht werden.

Die vorliegende Erfindung wird anhand der nachfolgenden Ausführungsbeispiele näher beschrieben, ohne den Gegenstand der vorliegenden Erfindung auf die Beispiele zu beschränken.

### Synthesebeispiel 1: Synthese des Tocopherolphosphordichlorids

In einen 250 ml Dreihalskolben mit einem Rückflusskühler und magnetischen Rührer werden 1 ml (11,4 mmol) Phosphortrichlorid, 4,9117 g (11,4 mmol) a-Tocopherol und 40 ml Chloroform gegeben. Das Reaktionsgemisch wird für 10 Stunden auf 70 °C erhitzt. Reinheit und Umsatz des a-Tocopherolphosphordichlorids wird mittels ¹H und ³¹P NMR-Spektren bestimmt. Die Reinheit des Produktes beträgt > 99 %.

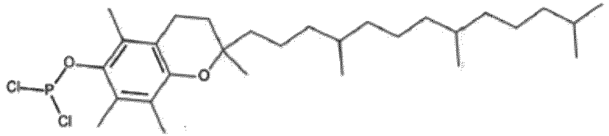

### Synthesebeispiel 2: Synthese eines polymeren Phosphits mit Isosorbid-Einheiten

Es wurde ein vergleichbarer Aufbau wie in Beispiel 1 verwendet. Zu dem Tocopherolphosphordichlorid wird 1,5015 g (10,3 mmol) Isosorbid, 8 ml (36,1 mmol) Triethylamin und 20 mlAcetonitril gegeben. Nach einer Stunde bei Raumtemperatur werden 2 ml(49,3 mmol) Methanol gegeben. Das Produkt wird in Toluol aufgereingt. Reinheit des Polyphosphites wird mittels ¹H und ³¹P NMR-Spektren bestimmt.

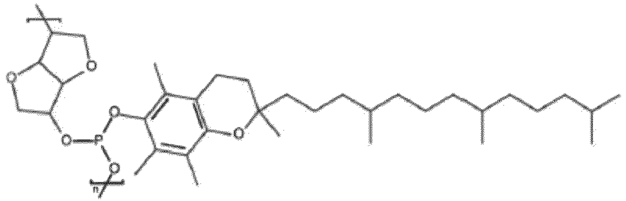

### Synthesebeispiel 3: Synthese eines Copolymeren enthaltend Isosorbid und Piperidin-Einheiten

Es wurde ein vergleichbarer Aufbau wie in Beispiel 1 verwendet. Zu dem Tocopherolphosphordichlorid wird 0,.2063 g (1,0 mmol) 4-Hydroxy-2,2,6,6-tetramethylpiperidin- 1-ethanol, 4 ml (28,9 mmol) Triethylamin und 20 ml Chloroform gegeben. Nach einer Stunde wird zu dem Reaktionsgemisch 1,3467 g (9,2 mmol) Isosorbid, 5,5 ml (39,7 mmol) Triethylamin und 20 ml Acetonitril gegeben. Nach einer Stunde bei Raumtemperatur werden 2 ml (49,3 mmol) Methanol gegeben. Das Produkt wird in Toluol aufgereingt. Reinheit des Polyphosphites wird mittels ¹H und ³¹P NMR-Spektren bestimmt.

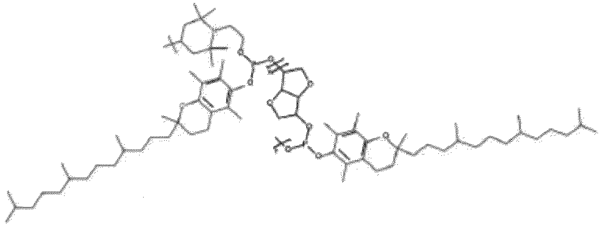

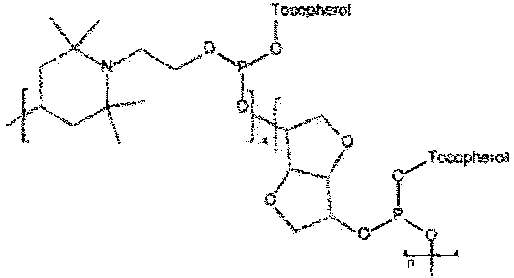

### Synthesebeispiel 4: Synthese einespolymeren Phosphits mit Hydrochinon Einheiten

Es wurde ein vergleichbarer Aufbau wie in Beispiel 1 verwendet. Zu dem Tocopherolphosphordichlorid wird 1,1290 g (10,3 mmol) Hydrochinon, 8 ml (36,1 mmol) Triethylamin und 20 mlAcetonitril gegeben. Nach einer Stunde bei Raumtemperatur werden 2 ml(49,3 mmol) Methanol gegeben. Das Produkt wird in Toluol aufgereingt. Reinheit des Polyphosphites wird mittels ¹H und ³¹P NMR-Spektren bestimmt.

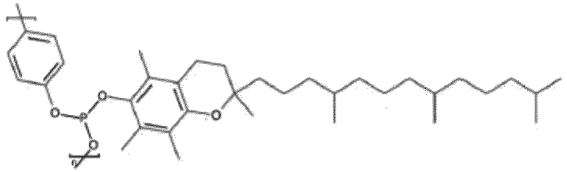

### Synthesebeispiel 5: Synthese eines Copolymeren enthaltend Hydrochinon und Piperidin-Einheiten

Es wurde ein vergleichbarer Aufbau wie in Beispiel 1 verwendet. Zu dem Tocopherolphosphordichlorid wird 0,2065 g (1,0 mmol) 4-Hydroxy-2,2,6,6-tetramethylpiperidin- 1-ethanol, 4 ml(28,9 mmol) Triethylamin und 20 ml Chloroform gegeben. Nach einer Stunde wird zu dem Reaktionsgemisch 1,0189 g (9,2 mmol) Hydrochinon, 5,5 ml(39,7 mmol) Triethylamin und 20 mlAcetonitril gegeben. Nach einer Stunde bei Raumtemperatur werden 2 ml (49,3 mmol) Methanol gegeben. Das Produkt wird in Toluol aufgereingt. Reinheit des Polyphosphites wird mittels ¹H und ³¹P NMR-Spektren bestimmt.

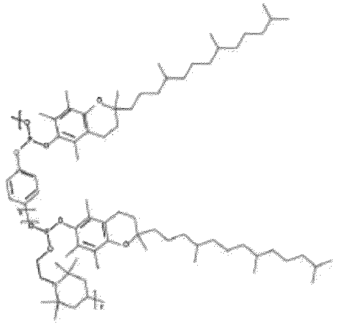

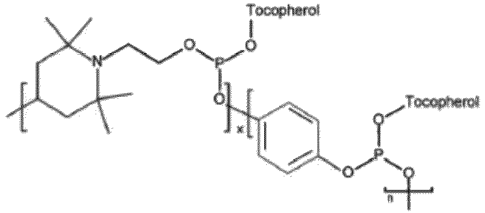

### Synthesebeispiel 6: Synthese eines polymeren Phosphits mit 1,4-Cyclohexandiol-Einheiten

Es wurde ein vergleichbarer Aufbau wie in Beispiel 1 verwendet. Zu dem Tocopherolphosphordichlorid wird 1,1952 g (10,3 mmol) 1,4-Cyclohexandiol, 8 ml (36,1 mmol) Triethylamin und 20 mlAcetonitril gegeben. Nach einer Stunde bei Raumtemperatur werden 2 ml(49,3 mmol) Methanol gegeben. Das Produkt wird in Toluol aufgereingt. Reinheit des Polyphosphites wird mittels ¹H und ³¹P NMR-Spektren bestimmt.

### Synthesebeispiel 7: Synthese eines Polyphosphits mit Vanillylalkohol-Einheiten

Es wurde ein vergleichbarer Aufbau wie in Beispiel 1 verwendet. Zu dem Tocopherolphosphordichlorid wird 1,5862 g (10,3 mmol) Vanillylalkohol, 8 ml (36, 1 mmol) Triethylamin und 20 mlAcetonitril gegeben. Nach einer Stunde bei Raumtemperatur werden 2 ml(49,3 mmol) Methanol gegeben. Das Produkt wird in Toluol aufgereingt. Reinheit des Polyphosphites wird mittels ¹H und ³¹P NMR-Spektren bestimmt.

### Synthesebeispiel 8: Synthese eines Polyphosphits mit 1,6-Hexandiol-Einheiten

Es wurde ein vergleichbarer Aufbau wie in Beispiel 1 verwendet. Zu dem Tocopherolphosphordichlorid wird 1,2158 g (10,3 mmol) 1,6-Hexandiol, 8 ml (36, 1 mmol) Triethylamin und 20 mlAcetonitril gegeben. Nach einer Stunde bei Raumtemperatur werden 2 ml(49,3 mmol) Methanol gegeben. Das Produkt wird in Toluol aufgereingt. Reinheit des Polyphosphites wird mittels ¹H und ³¹P NMR-Spektren bestimmt.

### Synthesebeispiel 9: Synthese eines Polyphosphits mit Hydroxyethyl-4-hydroxytetramethylpiperidin-Einheiten

Es wurde ein vergleichbarer Aufbau wie in Beispiel 1 verwendet. Zu dem Tocopherolphosphordichlorid wird 2,0713 g (10,3 mmol) Hydroxyethyl-4-hydroxytetramethylpiperidin, 8 ml (36,1 mmol) Triethylamin und 20 mlAcetonitril gegeben. Nach einer Stunde bei Raumtemperatur werden 2 ml(49,3 mmol) Methanol gegeben. Das Produkt wird in Toluol aufgereingt. Reinheit des Polyphosphites wird mittels ¹H und ³¹P NMR-Spektren bestimmt.

### Beispiel 1: Langzeitextrusionen

Es wurden die Verbindungen von Beispiel 2,3,4, 6, 7, 8 und 9 und diekommerziellen Phosphite ADK STAB 2112 (Tris(2,4-di-tert-butylphenol)phosphit) und Doverphos S-9228 (Bis(2,4-dicumylphenyl)pentaerythritol diphosphit) in Polypropylen (Moplen HP 500 N) an einem Micro Sec Model 2009 eingearbeitet. Die Compounds wurden bei 200 °C für 30 Minuten verarbeitet und dabei wurde der Kraftverlust gemessen.

| | | | | | | | | | | |
|---|---|---|---|---|---|---|---|---|---|---|
| Polypropylene | 100,0% | 99,8% | 99,8% | 99,8% | 99,8% | 99,8% | 99,8% | 99,8% | 99,8% | 99,8% |
| ADK STAB 2112 | | 0,2% | | | | | | | | |
| Doverphos S-9228 | | | 0,2% | | | | | | | |
| Beispiel 2 | | | | 0,2% | | | | | | |
| Beispiel 3 | | | | | 0,2% | | | | | |
| Beispiel 4 | | | | | | 0,2% | | | | |
| Beispiel 6 | | | | | | | 0,2% | | | |
| Beispiel 7 | | | | | | | | 0,2% | | |
| Beispiel 8 | | | | | | | | | 0,2% | |
| Beispiel 9 | | | | | | | | | | 0,2% |
| Restkraft | 47% | 65% | 78% | 97% | 94% | 96% | 95% | 94% | 93% | 94% |

| | | | | | | |
|---|---|---|---|---|---|---|
| Polypropylen | 99,8 % | 99.6 % | 99,6 % | 99.6 % | 99,6 % | 99,6 % |
| Calciumstearat (Vergleich) | 0,2 % | 0,2 % | 0,2 % | 0,2 % | 0,2 % | 0,2 % |
| ADK STAB 2112 (Vergleich) | | 0,2 % | | | | |
| Beispiel 2 | | | 0,2 % | | | |
| Beispiel 3 | | | | 0,2 % | | |
| Beispiel 4 | | | | | 0,2 % | |
| Beispiel 5 | | | | | | 0,2 % |
| Restkraft | 36 % | 44 % | 59 % | 57 % | 75 % | 60 % |

Die erfindungsgemäßen Polymeren weisen dabei eine höhere Restkraft als die Vergleichsbeispiele auf, woraus eine höhere Stabilisierungswirkung resultiert.

### Beispiel 2: Mehrfachextrusionen

Zum weiteren Testen wurden die Phosphite mit und ohne einem phenolischen Stabilisator(ADK STAB AO 60, Pentaerythritol tetrakis(3-(3,5-di-tert-butyl-4-hydroxyphenyl)propionat)) mit einem *ThermoScientificProcess* 11 5-mal bei 230°C verarbeitet. Zur Analyse der Verbindungen wurde der MFR (Melt Flow Rate) bestimmt.

| | | | | | | |
|---|---|---|---|---|---|---|
| Polypropylen | 99,8 % | 99,6 % | 99,6 % | 99,6 % | 99,6 % | 99,6 % |
| Calciumstearat (Vergleich) | 0,2 % | 0,2 % | 0,2 % | 0,2 % | 0,2 % | 0,2 % |
| ADK STAB 2112 (Vergleich) | | 0,2 % | | | | |
| Beispiel 2 | | | 0,2 % | | | |
| Beispiel 3 | | | | 0,2 % | | |
| Beispiel 4 | | | | | 0,2 % | |
| Beispiel 5 | | | | | | 0,2 % |
| MFI extrusion @230 °C | | | | | | |
| 1 Extrusion | 17 | 17 | 16 | 15 | 16 | 15 |
| 2 Extrusion | 18 | 17 | 16 | 16 | 16 | 15 |
| 3 Extrusion | 19 | 16 | 16 | 16 | 16 | 15 |
| 4 Extrusion | 19 | 17 | 16 | 16 | 16 | 16 |
| 5 Extrusion | 20 | 17 | 16 | 15 | 16 | 16 |

| | | | | | | |
|---|---|---|---|---|---|---|
| Polypropylen | 99,6 % | 99,4 % | 99,4 % | 99,4 % | 99,4 % | 99,4 % |
| Calciumstearat | 0,2 % | 0,2 % | 0,2 % | 0,2 % | 0,2 % | 0.2 % |
| ADK STAB AO60 (Vergleich) | 0,2 % | 0.2 % | 0,2 % | 0,2 % | 0,2 % | 0,2 % |
| ADK STAB 2112 (Vergleich) | | 0,2 % | | | | |
| Beispiel 2 | | | 0,2 % | | | |
| Beispiel 3 | | | | 0,2 % | | |
| Beispiel 4 | | | | | 0,2 % | |
| Beispiel 5 | | | | | | 0,2 % |
| MFI extrusion @230 °C | | | | | | |
| 1 Extrusion | 17 | 16 | 16 | 16 | 15 | 15 |
| 2 Extrusion | 18 | 16 | 16 | 16 | 16 | 16 |
| 3 Extrusion | 19 | 16 | 16 | 16 | 15 | 15 |
| 4 Extrusion | 19 | 16 | 16 | 15 | 16 | 16 |
| 5 Extrusion | 20 | 16 | 16 | 16 | 15 | 15 |

Bei der Mehrfachextrusion wird mit den erfindungsgemäßen Stabilisatoren der niedrigste MFR Wert, d.h. die beste Stabilisatorwirkung erhalten.

### Beispiel 3: Mehrfachextrusionen bei 260 °C

Zum weiteren Testen wurden die Phosphite ohne einem phenolischen Stabilisator mit einem *ThermoScientificProcess* 11 5-mal bei 260°Cverarbeitet. ZurAnalyse derVerbindungen wurde der MFR (Melt Flow Rate) bestimmt.

| | | | | | | | | | |
|---|---|---|---|---|---|---|---|---|---|
| Polypropylene | 99,8% | 99,6% | 99,6% | 99,6% | 99,6% | 99,6% | 99,6% | 99,6% | 99,6% |
| Calciumstearat | 0,2% | 0,2% | 0,2% | 0,2% | 0,2% | 0,2% | 0,2% | 0,2% | 0,2% |
| ADK STAB 2112 | | 0,2% | | | | | | | |
| Doverphos S-9228 | | | 0,2% | | | | | | |
| Beispiel 2 | | | | 0,2% | | | | | |
| Beispiel 3 | | | | | 0,2% | | | | |
| Beispiel 4 | | | | | | 0,2% | | | |
| Beispiel 6 | | | | | | | 0,2% | | |
| Beispiel 8 | | | | | | | | 0,2% | |
| Beispiel 9 | | | | | | | | | 0,2% |
| MFI extrusion @ 260 °C | | | | | | | | | |
| 1. Extrusion | 30 | 23 | 18 | 19 | 17 | 19 | 17 | 17 | 17 |
| 2. Extrusion | 43 | 27 | 20 | 19 | 18 | 19 | 18 | 18 | 18 |
| 3. Extrusion | 79 | 34 | 21 | 19 | 18 | 20 | 18 | 19 | 18 |
| 4. Extrusion | 128 | 43 | 23 | 20 | 18 | 20 | 19 | 20 | 18 |
| 5. Extrusion | 209 | 60 | 25 | 20 | 19 | 21 | 20 | 22 | 19 |

Bei der Mehrfachextrusion wird mit den erfindungsgemäßen Stabilisatoren auch bei hohen Temperaturen (260 °C) der niedrigste MFR Wert, d.h. die beste Stabilisatorwirkung erhalten.

## Patentansprüche

1. Oligomer oder Polymer, umfassend als Strukturelement eine Struktur gemäß der allgemeinen Formel I 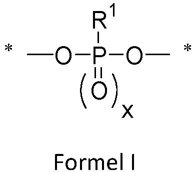 wobei
R¹ gemäß der nachfolgenden Formel II definiert ist 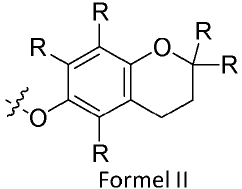
wobei
R bei jedem Auftreten gleich oder verschieden ist und ausgewählt ist aus der Gruppe bestehend aus Wasserstoff oder linearen oder verzweigten Alkylresten mit 1 bis 36 Kohlenstoffatomen, und
x 0 oder 1 ist.

2. Oligomer oder Polymer nach Anspruch 1, **dadurch gekennzeichnet, dass** R¹ gemäß nachfolgender Formel Ila definiert ist

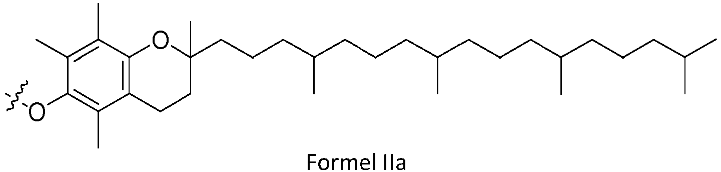

3. Oligomer oder Polymer nach einem der vorhergehenden Ansprüche, enthaltend die nachfolgende Wiederholungseinheit gemäß Formel III 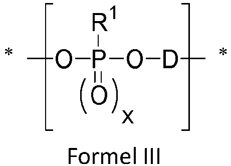 wobei
D bei jedem Auftreten gleich oder verschieden ist und eine von einem Diol abgeleitete Funktionalität ist.

4. Oligomer oder Polymer nach vorhergehendem Anspruch, **dadurch gekennzeichnet, dass** die von einem Diol abgeleitete Funktionalität eine von einem aliphatischen, aromatischen oder heterocyclischen Diol abgeleitete Funktionalität ist.

5. Oligomer oder Polymer nach einem der beiden vorhergehenden Ansprüche, **dadurch gekennzeichnet, dass** die von einem Diol abgeleitete Funktionalität
a) eine von einem aliphatischen Diol abgeleitete Funktionalität ist und bevorzugt abgeleitet ist von Ethylenglycol, 1,3-Propylenglycol, 1,2-Propylenglycol, 1,4-Butandiol, 1,5-Pentandiol, 1,6-Hexandiol, 1, 12-Dodecandiol, 1,4-Cyclohexandiol, 1,3-Cyclohexandiol und/oder 1,4-Cyclohexandimethanol
b) eine von einem aromatischen Diol abgeleitete Funktionalität ist und bevorzugt abgeleitet ist von Hydrochinon, Resorcin, 1,5-, 2,6- oder 2,7-Dihydroxynaphthalin, Vanillylalkohol oder den nachfolgenden Diolen 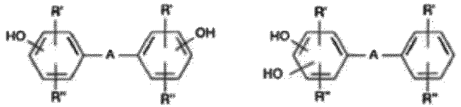 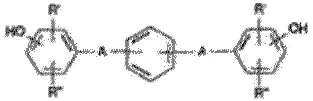 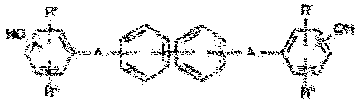 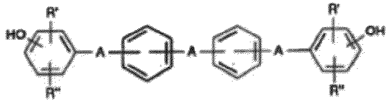 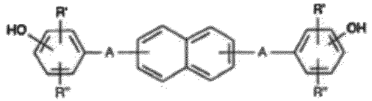 wobei jeweils unabhängig voneinander
A eine direkte Bindung, -O-, -SO₂-, -C(O)-, -CH(CH₃)- oder -C(CH₃)2-, und
R' und R" bei jedem Auftreten gleich oder verschieden sind und ausgewählt sind aus der Gruppe bestehend aus linearen oder verzweigten Alkylresten mit 1 bis 36 Kohlenstoffatomen,
bedeuten,
c) eine von einem heterocyclischem Diol abgeleitete Funktionalität ist und bevorzugt abgeleitet ist von Hydroxyethyl-4-hydroxytetramethylpiperidin, 1,4-Dithian-2,5-diol, oder
d) eine von den nachfolgenden Diolen abgeleitete Funktionalität ist 2,3-Dimethoxy-1,4-butandiol,

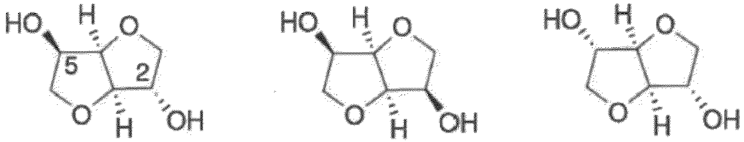

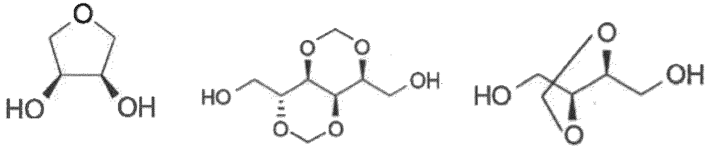

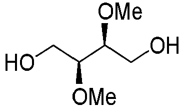

6. Oligomer oder Polymer nach einem der vorhergehenden Ansprüche, **dadurch gekennzeichnet, dass** die Wiederholungseinheit gemäß Formel I entsprechend den nachfolgenden Wiederholungseinheiten gemäß Formeln III und Illa 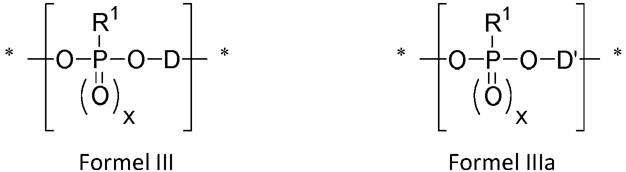 definiert ist und diese im Oligomer oder Polymer enthalten sind, wobei R¹, D und x wie oben stehend definiert sind und die Definition von D' der Definition von D entspricht, mit der Maßgabe, dass D und D' von unterschiedlichen Diolen abgeleitet sind.

7. Oligomer oder Polymer nach vorhergehendem Anspruch, **dadurch gekennzeichnet, dass** das molare Verhältnis der Wiederholungseinheiten III zu Illa von 0,1 : 99,9 bis 50 : 50, bevorzugt von 0,5 : 99,5 bis 10 : 90 beträgt.

8. Oligomer oder Polymer nach einem der vorhergehenden Ansprüche, **dadurch gekennzeichnet, dass** x für alle Wiederholungseinheiten gemäß Formel I 0 ist oder das Oligomer oder Polymer sowohl Wiederholungseinheiten gemäß Formel I, bei denen x = 0 ist, als auch Wiederholungseinheiten gemäß Formel I, bei denen x = 1 ist, enthält, wobei das molare Verhältnis der Wiederholungseinheiten gemäß Formel I, bei denen x = 0 ist, zu den Wiederholungseinheiten gemäß Formel I, bei denen x = 1 ist von 50:50 bis <100 : >0, bevorzugt 90:10 bis 99,9:0,1 beträgt.

9. Zusammensetzung, enthaltend mindestens eine zu stabilisierende organische Komponente sowie mindestens ein Oligomer oder Polymer nach einem der vorhergehenden Ansprüche.

10. Zusammensetzung nach vorhergehendem Anspruch, **dadurch gekennzeichnet, dass** das mindestens eine Oligomer oder Polymer in einem Gewichtsanteil, bezogen auf die gesamte Zusammensetzung von 0,01 bis 5,0 Gew.-Teile, bevorzugt 0,02 bis 2,0 Gew.-Teile, besonders bevorzugt 0,05 bis 1,0 Gew.-Teile enthalten ist.

11. Zusammensetzung nach einem der beiden vorhergehenden Ansprüche, **dadurch gekennzeichnet, dass** die mindestens eine zu stabilisierende organische Komponente ausgewählt ist aus der Gruppe bestehend aus
• Kunststoffen, insbesondere thermoplastischen, elastomeren oder duromeren Kunststoffen,
• mindestens ein Öl, Fett oder Wachs, insbesondere Mineralöle, Pflanzenfette bzw. -öle oder Tierfette bzw. -öle, z.B. Palmöl, Olivenöl, Rapsöl, Leinöl, Sojabohnenöl, Sonnenblumenöl, Rizinusöl, Fischöle oder Rindertalg sowie Öle, Fette oder Wachse auf der Basis von z.B. synthetischen Estern,
• mineralischen oder synthetischen Schmierstoffen, Hydraulikölen, Motorenölen, Turbinenölen, Getriebeölen, Metallbearbeitungsflüssigkeiten oder Schmierfetten, sowie
• polymerisationsfähigen Monomeren, insbesondere radikalisch polymerisationsfähige Monomere, insbesondere Monomere, die radikalisch durch Initiatoren wie z.B. Peroxide oder auch Sauerstoff polymerisiert werden können wie z.B. Acrylester, Methacrylester, Acrylnitril, Styrole oder Vinylchlorid.

12. Zusammensetzung nach einem der Ansprüche 10 bis 12, enthaltend mindestens einen Zusatzstoff ausgewählt aus der Gruppe bestehend aus primären Antioxidantien, sekundären Antioxidantien, UV-Absorber, der Lichtstabilisatoren, der Metalldesaktivatoren, der Füllstoffdesaktivatoren, der Antiozonantien, Nukleierungsmitteln, Antinukleierungsmitteln, Schlagzähigkeitsverbesserer, Weichmacher, Gleitmitteln, Rheologiemodifikatoren, Thixotropiemitteln, Kettenverlängerer, Verarbeitungshilfsmitteln, Entformungshilfsmitteln, Flammschutzmitteln, Pigmenten, Farbstoffen, optische Aufhellern, antimikrobielle Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobierungsmitteln, Haftvermittler, Dispergiermitteln, Kompatibilisatoren, Sauerstofffänger, Säurefänger, Treibmitteln, Abbau-Additiven, Entschäumungshilfsmitteln, Geruchsfängern, Markierungsmitteln, Antifoggingmitteln, Füllstoffen und Verstärkungsstoffen.

13. Verwendung eines Oligomers oder Polymers nach einem der Ansprüche 1 bis 8 als Stabilisator für organische Materialien.

14. Verwendung eines Oligomers oder Polymers nach vorhergehendem Anspruch, als Stabilisator gegen
• thermischen, aktinischen oder oxidativen Abbau von Kunststoffen, oder als Flammschutzmittel für Kunststoffe,
• thermischen, aktinischen oder oxidativen Abbau von Lacken, Farben und Beschichtungen (Coatings)
• thermischen, aktinischen oder oxidativen Abbau von Ölen, Fetten oder Wachen, insbesondere Mineralölen, Pflanzenfetten bzw. -ölen oder Tierfetten bzw. -ölen, z.B. Palmöl, Olivenöl, Rapsöl, Leinöl, Sojabohnenöl, Sonnenblumenöl, Rizinusöl, Fischöle oder Rindertalg sowie Ölen, Fetten oder Wachsen auf der Basis von z.B. synthetischen Estern,
• thermischen, aktinischen oder oxidativen Abbau von mineralischen oder synthetischen Schmierstoffen, Hydraulikölen, Motorenölen, Turbinenölen, Getriebeölen, Metallbearbeitungsflüssigkeiten oder Schmierfetten, oder
• gegen vorzeitige Polymerisation und/oder Oxidation von polymerisationsfähigen Monomeren, insbesondere Monomere, die radikalisch durch Initiatoren wie z.B. Peroxide oder auch Sauerstoff polymerisiert werden können wie z.B. Acrylester, Methacrylester, Acrylnitril, Styrole oder Vinylchlorid.

15. Formmasse oder ein Formteil, herstellbar aus einer Kunststoffzusammensetzung gemäß vorhergehender Ansprüche insbesondere in Form von Spritzgussteilen, Folien, Filmen, Schäumen, Fasern, Kabeln, Rohren, Profilen, Hohlkörpern, Bändchen, Membranen und/oder Klebstoffen.

## Claims

1. An oligomer or polymer, comprising, as a structural element, a structure according to the general Formula I 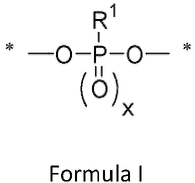 wherein
R¹ is defined according to Formula II below 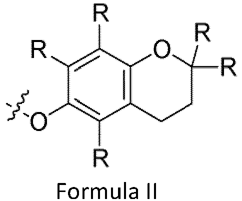
wherein
R is the same or different at each occurrence and is selected from the group consisting of hydrogen or linear or branched alkyl radicals having from 1 to 36 carbon atoms, and
x is 0 or 1.

2. The oligomer or polymer according to claim 1, **characterized in that** R¹ is defined according to Formula Ila

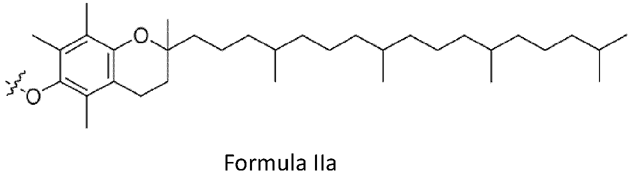

3. The oligomer or polymer according to any one of the preceding claims, comprising the following repeating unit according to Formula III 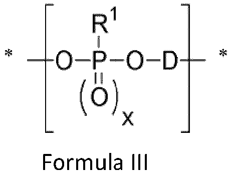 wherein
D is the same or different at each occurrence and is a functionality derived from a diol.

4. The oligomer or polymer according to the preceding claim, **characterized in that** the functionality derived from a diol is a functionality derived from an aliphatic, aromatic or heterocyclic diol.

5. The oligomer or polymer according to any one of the two preceding claims, **characterized in that** the functionality derived from a diol
a) is a functionality derived from an aliphatic diol and preferably is derived from ethylene glycol, 1,3-propylene glycol, 1,2-propylene glycol, 1,4-butanediol, 1,5-pentanediol, 1,6-hexanediol, 1,12-dodecanediol, 1,4-cyclohexanediol, 1,3-cyclohexanediol and/or 1,4-cyclohexanedimethanol
b) is a functionality derived from an aromatic diol and preferably is derived from hydroquinone, resorcinol, 1,5-, 2,6- or 2,7-dihydroxynaphthalene, vanillyl alcohol or the following diols 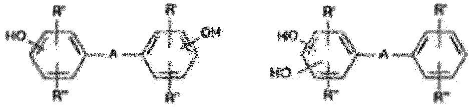 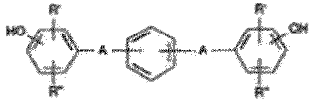 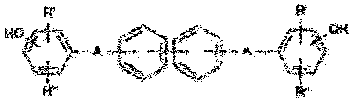 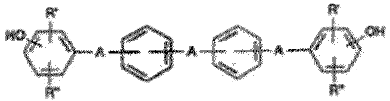 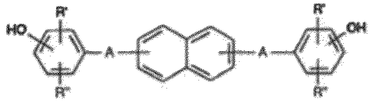 where in each case independently of one another
A means a direct bond, -O-, -SO₂-, -C(O)-, -CH(CH₃)- or -C(CH₃)₂-, and
R' and R" are the same or different at each occurrence and are selected from the group consisting of linear or branched alkyl moieties having 1 to 36 carbon atoms,
c) is a functionality derived from a heterocyclic diol and preferably derived from hydroxyethyl-4-hydroxytetramethylpiperidine, 1,4-dithiane-2,5-diol, or
d) is a functionality derived from the following diols 2,3-dimethoxy-1,4-butanediol,

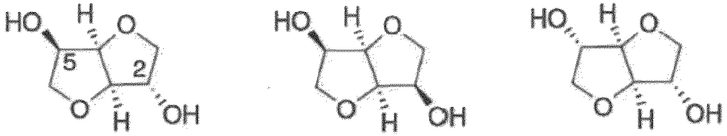

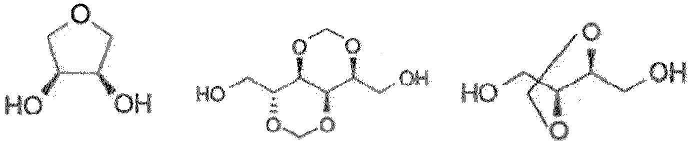

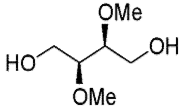

6. The oligomer or polymer according to any one of the preceding claims, **characterized in that** the repeating unit according to Formula I is defined according to the following repeating units according to Formulas III and Illa 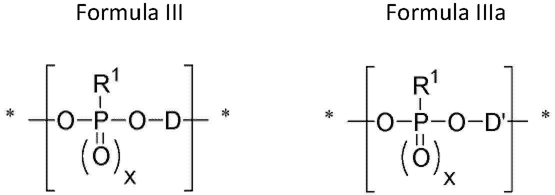 and these are comprised in the oligomer or polymer, wherein R¹, D and x are as defined above and the definition of D' corresponds to the definition of D, with the proviso that D and D' are derived from different diols.

7. The oligomer or polymer according to the preceding claim, **characterized in that** the molar ratio of the repeating units III to IIIa is from 0.1: 99.9 to 50: 50, preferably from 0.5: 99.5 to 10: 90.

8. The oligomer or polymer according to any one of the preceding claims, **characterized in that** x is 0 for all repeating units according to Formula I, or the oligomer or polymer comprises both repeating units according to Formula I, in which x = 0, and repeating units according to Formula I, in which x = 1, wherein the molar ratio of the repeating units according to Formula I, in which x = 0, to the repeating units according to Formula I, in which x = 1, is from 50:50 to <100: >0, preferably 90:10 to 99.9:0.1.

9. A composition comprising at least one organic component to be stabilized and at least one oligomer or polymer according to any one of the preceding claims.

10. The composition according to the preceding claim, **characterized in that** the at least one oligomer or polymer is present in a proportion by weight, based on the total composition, of 0.01 to 5.0 parts by weight, preferably 0.02 to 2.0 parts by weight, particularly preferably 0.05 to 1.0 parts by weight.

11. The composition according to any one of the two preceding claims, **characterized in that** the at least one organic component to be stabilized is selected from the group consisting of
• plastics, in particular thermoplastic, elastomeric or duromer plastics,
• at least one oil, fat or wax, in particular mineral oils, vegetable fats or oils or animal fats or oils, for example, palm oil, olive oil, rapeseed oil, linseed oil, soybean oil, sunflower oil, castor oil, fish oils or beef tallow and oils, fats or waxes on the basis of, for example, synthetic esters,
• mineral or synthetic lubricants, hydraulic oils, engine oils, turbine oils, gear oils, metalworking fluids or lubricating greases, and
• polymerizable monomers, in particular radically polymerizable monomers, in particular monomers which can be radically polymerized by initiators like peroxides or oxygen, such as e.g. acrylic esters, methacrylic esters, acrylonitrile, styrenes or vinyl chloride.

12. The composition according to any one of claims 10 to 12, comprising at least one additive selected from the group consisting of primary antioxidants, secondary antioxidants, UV absorbers, light stabilizers, metal deactivators, filler deactivators, antiozonants, nucleating agents, antinucleating agents, impact modifiers, plasticizers, lubricants, rheology modifiers, thixotropic agents, chain extenders, processing aids, mold release agents, flame retardants, pigments, dyes, optical brighteners, antimicrobial agents, antistatic agents, slip agents, antiblocking agents, coupling agents, crosslinking agents, anticross-linking agents, hydrophilic agents, hydrophobic agents, adhesion promoters, dispersants, compatibilizers, oxygen scavengers, acid scavengers, blowing agents, degradation additives, defoaming aids, odor scavengers, marking agents, anti-fogging agents, fillers and reinforcements.

13. A use of an oligomer or polymer according to any one of claims 1 to 8 as a stabilizer for organic materials.

14. The use of an oligomer or polymer according to the preceding claim as a stabilizer against
• thermal, actinic or oxidative degradation of plastics, or as a flame retardant for plastics,
• thermal, actinic or oxidative degradation of lacquers, paints and coatings
• thermal, actinic or oxidative degradation of oils, fats or waxes, in particular mineral oils, vegetable fats or oils or animal fats or oils, for example palm oil, olive oil, rapeseed oil, linseed oil, soybean oil, sunflower oil, castor oil, fish oils or beef tallow and oils, fats or waxes based on, for example, synthetic esters,
• thermal, actinic or oxidative degradation of mineral or synthetic lubricants, hydraulic oils, engine oils, turbine oils, gear oils, metalworking fluids or lubricating greases, or
• against premature polymerization and/or oxidation of polymerizable monomers, in particular monomers which can be radically polymerized by initiators like e.g. peroxides or oxygen, such as e.g. acrylic esters, methacrylic esters, acrylonitrile, styrenes or vinyl chloride.

15. A molding compound or a molded part, producible from a plastic composition according to preceding claims, in particular in the form of injection molded parts, foils, films, foams, fibers, cables, pipes, profiles, hollow bodies, ribbons, membranes and/or adhesives.

## Revendications

1. Oligomère ou polymère, comprenant comme élément structurel une structure de formule générale I 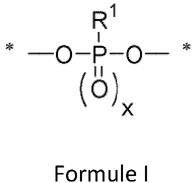 dans lequel
R¹ est défini selon la formule II ci-dessous 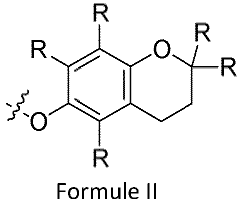
dans lequel
R est identique ou différent à chaque occurrence et est choisi dans le groupe constitué par l'hydrogène ou des radicaux alkyle linéaires ou ramifiés ayant de 1 à 36 atomes de carbone, et
x est égal à 0 ou 1.

2. Oligomère ou polymère selon la revendication 1, **caractérisé en ce que** R1 est défini selon la formule IIa ci-dessous

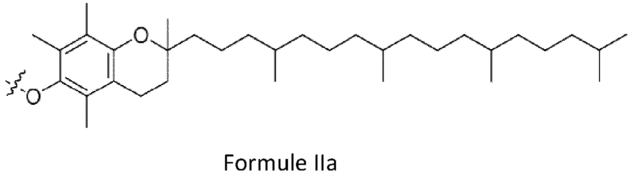

3. Oligomère ou polymère selon l'une quelconque des revendications précédentes, contenant le motif répétitif ci-dessous selon la formule III 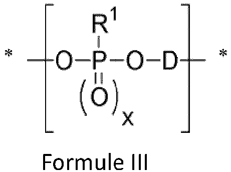 dans lequel
D est identique ou différent à chaque occurrence et est une fonctionnalité dérivée d'un diol.

4. Oligomère ou polymère selon la revendication précédente, **caractérisé en ce que** la fonctionnalité dérivée d'un diol est une fonctionnalité dérivée d'un diol aliphatique, aromatique ou hétérocyclique.

5. Oligomère ou polymère selon l'une quelconque des deux revendications précédentes, **caractérisé en ce que** la fonctionnalité dérivée d'un diol
a) est une fonctionnalité dérivée d'un diol aliphatique et est de manière préférée dérivée de l'éthylène glycol, du 1,3-propylène glycol, du 1,2-propylène glycol, du 1,4-butanediol, du 1,5-pentanediol, du 1,6-hexanediol, du 1,12-dodécanediol, du 1,4-cyclohexanediol, du 1,3-cyclohexanediol et/ou du 1,4-cyclohexanediméthanol
b) est une fonctionnalité dérivée d'un diol aromatique et est de manière préférée dérivée de l'hydroquinone, du résorcinol, du 1,5-, 2,6- ou 2,7-dihydroxynaphtalène, de l'alcool vanillique ou des diols ci-dessous 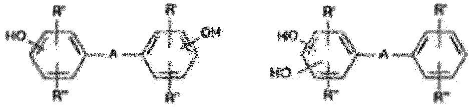 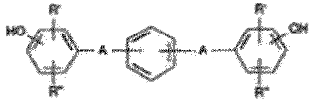 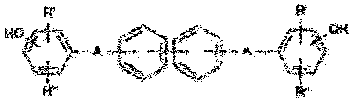 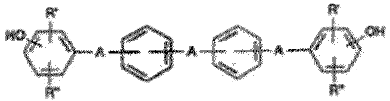 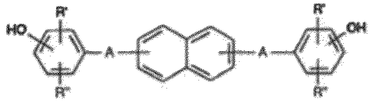 dans lequel, de manière respectivement indépendante les uns des autres,
A représente une liaison directe, -O-, -SO2-, -C(O)-, -CH(CH3)- ou - C(CH3)2-, et
R' et R" sont identiques ou différents à chaque occurrence et sont choisis dans le groupe constitué par des radicaux alkyle linéaires ou ramifiés ayant de 1 à 36 atomes de carbone,
c) est une fonctionnalité dérivée d'un diol hétérocyclique et est de manière préférée dérivée idéalement de l'hydroxyéthyl-4-hydroxytétraméthylpipéridine, du 1,4-dithian-2,5-diol, ou
d) est une fonctionnalité dérivée des diols ci-dessous 2,3-diméthoxy-1,4-butanediol,

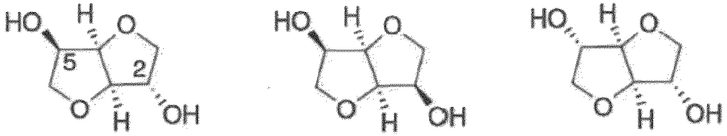

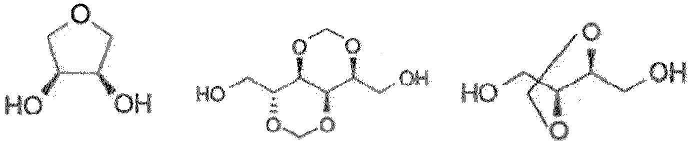

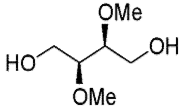

6. Oligomère ou polymère selon l'une quelconque des revendications précédentes, **caractérisé en ce que** le motif répétitif selon la formule I est définie en fonction des motifs répétitifs ci-dessous selon les formules III et Illa 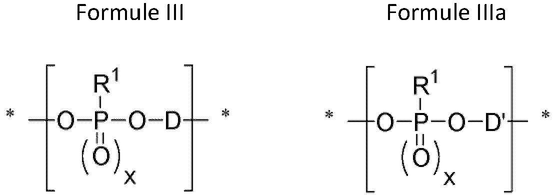 et lesdits motifs répétitifs sont contenues dans l'oligomère ou le polymère, dans lequel R¹, D et x sont définis comme ci-dessus et la définition de D' correspond à la définition de D, sachant que D et D' sont dérivés de diols différents.

7. Oligomère ou polymère selon la revendication précédente, **caractérisé en ce que** le rapport molaire entre les motifs répétitifs III et Illa est compris entre 0,1:99,9 et 50:50, de manière préférée entre 0,5:99,5 et 10:90.

8. Oligomère ou polymère selon l'une quelconque des revendications précédentes, **caractérisé en ce que** x est égal à 0 pour toutes les unités de répétition de formule I ou l'oligomère ou le polymère contient à la fois des unités de répétition motifs répétitifs de formule I pour lesquelles x = 0 et des motifs répétitifs de formule I pour lesquelles x = 1, dans lequel le rapport molaire entre les motifs répétitifs de formule I pour lesquelles x = 0 et les motifs répétitifs de formule I pour lesquelles x = 1 est compris entre 50:50 et <100:>0, de manière préférée compris entre 90:10 et 99,9:0,1.

9. Composition contenant au moins un composant organique à stabiliser ainsi qu'au moins un oligomère ou polymère selon l'une quelconque des revendications précédentes.

10. Composition selon la revendication précédente, **caractérisée en ce que** le au moins un oligomère ou polymère est contenu en une proportion en poids, par rapport à la composition totale, comprise entre 0,01 et 5,0 parts en poids, idéalement comprise entre 0,02 et 2,0 parts en poids, particulièrement idéalement comprise entre 0,05 et 1,0 part en poids.

11. Composition selon l'une quelconque des deux revendications précédentes, **caractérisée en ce que** le au moins un composant organique à stabiliser est choisi dans le groupe constitué par
• les matières plastiques, en particulier les matières plastiques thermoplastiques, élastomères ou duromères,
• au moins une huile, une graisse ou une cire, en particulier les huiles minérales, les graisses ou les huiles végétales ou les graisses ou les huiles animales, par exemple l'huile de palme, l'huile d'olive, l'huile de colza, l'huile de lin, l'huile de soja, l'huile de tournesol, l'huile de ricin, les huiles de poisson ou le suif de boeuf, ainsi que les huiles, graisses ou cires à base, par exemple, d'esters synthétiques,
• les lubrifiants minéraux ou synthétiques, les huiles hydrauliques, les huiles pour moteurs, les huiles pour turbines, les huiles pour boîtes de vitesses, les fluides de travail des métaux ou les graisses lubrifiantes, et
• les monomères polymérisables, en particulier les monomères polymérisables par voie radicalaire, en particulier les monomères qui peuvent être polymérisés par voie radicalaire grâce à des agents d'amorçage tels que des peroxydes ou l'oxygène, par exemple les esters acryliques, les esters méthacryliques, l'acrylonitrile, les styrènes ou le chlorure de vinyle.

12. Composition selon l'une quelconque des revendications 10 à 12, contenant au moins un additif choisi dans le groupe constitué par les antioxydants primaires, les antioxydants secondaires, les absorbeurs d'UV, les stabilisants à la lumière, les désactivateurs métalliques, les désactivateurs de charge, les anti-ozonants, les agents de nucléation, les agents antinucléants, les améliorateurs de résistance aux chocs, les plastifiants, les lubrifiants, les modificateurs de rhéologie, les agents thixotropes, les allongeurs de chaîne, les auxiliaires de traitement, les auxiliaires de démoulage, les retardateurs de flamme, les pigments, les colorants, les azurants optiques, les agents antimicrobiens, les antistatiques, les agents glissants, les anti-bloquants, les agents de couplage, les agents de réticulation, les agents anti-réticulants, les agents hydrophilisants, les agents hydrofuges, les promoteurs d'adhérence, les dispersants, les compatibilisateurs, les capteurs d'oxygène, les capteurs d'acide, les agents propulseurs, les additifs de dégradation, les auxiliaires anti-mousse, les pièges à odeurs, les agents de marquage, les agents anti-buée, les matières de charge et de renforcement.

13. Utilisation d'un oligomère ou d'un polymère selon l'une quelconque des revendications 1 à 8 comme stabilisant pour des matériaux organiques.

14. Utilisation d'un oligomère ou d'un polymère selon la revendication précédente, comme stabilisant contre
• la dégradation thermique, actinique ou oxydative des matières plastiques, ou comme retardateur de flamme pour des matières plastiques,
• la dégradation thermique, actinique ou oxydative des vernis, peintures et revêtements (enduits)
• la dégradation thermique, actinique ou oxydative des huiles, graisses ou cires, en particulier des huiles minérales, des graisses ou huiles végétales ou des graisses ou huiles animales, par exemple l'huile de palme, l'huile d'olive, l'huile de colza, l'huile de lin, l'huile de soja, l'huile de tournesol, l'huile de ricin, les huiles de poisson ou le suif de boeuf, ainsi que les huiles, graisses ou cires à base, par exemple, d'esters synthétiques,
• la dégradation thermique, actinique ou oxydative des lubrifiants minéraux ou synthétiques, des huiles hydrauliques, des huiles pour moteurs, des huiles pour turbines, des huiles pour boîtes de vitesses, de fluides de travail des métaux ou des graisses lubrifiantes, ou
• contre la polymérisation et/ou l'oxydation prématurée(s) des monomères polymérisables, en particulier les monomères qui peuvent être polymérisés par voie radicalaire grâce à des agents d'amorçage tels que des peroxydes ou l'oxygène, par exemple les esters acryliques, les esters méthacryliques, l'acrylonitrile, les styrènes ou le chlorure de vinyle.

15. Masse moulée ou pièce moulée, pouvant être fabriquée à partir d'une composition de matière plastique selon les revendications précédentes, en particulier sous forme de pièces moulées par injection, de feuilles, de films, de mousses, de fibres, de câbles, de tuyaux, de profilés, de corps creux, de rubans, de membranes et/ou d'adhésifs.
